(19) Europäisches Patentamt
European Patent Office
Office européen des brevets

(11) Veröffentlichungsnummer: **0 059 166**
**B1**

(12) **EUROPÄISCHE PATENTSCHRIFT**

(45) Veröffentlichungstag der Patentschrift: **03.04.85**

(51) Int. Cl.⁴: **C 09 B 35/02**, G 03 C 5/52

(21) Anmeldenummer: **82810068.5**

(22) Anmeldetag: **15.02.82**

# (54) Disazofarbstoffe und ihre Verwendung in farbphotographischen Aufzeichnungsmaterialien für das Silberfarbbleichverfahren.

(30) Priorität: **20.02.81 CH 1145/81**

(43) Veröffentlichungstag der Anmeldung: **01.09.82 Patentblatt 82/35**

(45) Bekanntmachung des Hinweises auf die Patenterteilung: **03.04.85 Patentblatt 85/14**

(84) Benannte Vertragsstaaten: **BE CH DE FR GB IT LI NL**

(56) Entgegenhaltungen:
**DE-A- 1 804 070**
**DE-A- 2 015 708**
**DE-A- 2 606 560**
**DE-C- 695 348**
**FR-A- 1 399 253**
**FR-A- 2 130 599**
**GB-A- 478 227**
**US-A- 2 294 893**

(73) Patentinhaber: **CIBA-GEIGY AG**
**Postfach**
**CH-4002 Basel (CH)**

(72) Erfinder: **Jan, Gérald, Dr.**
**Rte. de la Poudrière 33**
**CH-1700 Fribourg (CH)**
Erfinder: **Lenoir, John, Dr.**
**Avenue Général Guisan 34**
**CH-1700 Fribourg (CH)**

EP 0 059 166 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue, öllösliche Disazofarbstoffe und deren Verwendung in farbphotographischen Aufzeichnungsmaterialien für das Silberfarbbleichverfahren.

Bekannt ist die Verwendung von wasserlöslichen Polyazo- oder Azoxyfarbstoffen für das Silberfarbbleichverfahren (A. Meyer, J. Phot. Sci. 13, (1965), 90 ; Research Disclosure 17643/VII A, Dezember 1978). Die Verwendung solcher Azofarbstoffe bietet zunächst insofern Vorteile, dass eine leichte und homogene Anfärbung der hydrophilen, kolloidalen Bindemittel einer photographischen Schicht, insbesondere Gelatine, möglich ist. Bei der Verarbeitung belichteter Silberfarbbleichmaterialien entstehen ferner an den Belichtungsstellen wasserlösliche Spaltprodukte oder Azofarbstoffe, die leicht auswaschbar sind. Von den Nachteilen, die jedoch bei Verwendung wasserlöslicher Azofarbstoffe auftreten, ist besonders die Tendenz dieser Farbstoffe zur Diffusion in und zwischen photographischen Schichten zu erwähnen. Zur Ueberwindung dieses Nachteils wurde bereits die Verwendung von Reaktivfarbstoffen vorgeschlagen. Dies brachte aber eine zu starke Beeinflussung der rheologischen, chemischen und mechanischen Eigenschaften der herzustellenden photographischen Schicht mit sich. Auch der Einsatz höhermolekularer wasserlöslicher Azofarbstoffe brachte kein vollständig zufriedenstellendes Ergebnis. Zwar wird damit die Diffusionsfestigkeit erhöht, doch entsteht in der Neigung solcher Farbstoffe, durch Aggregation Micellen zu bilden, ein weiterer Nachteil, der die Farbdichte des photographischen Bildes empfindlich stört.

Die schweizerische Patentschrift 600 385 beschreibt nun ein Silberfarbbleichverfahren, in dem wasserunlösliche Azofarbstoffe mit maskierten Auxochromen in Gelatine dispergiert werden. Diese Farbstoffe bleichen jedoch nur langsam und teilweise unvollständig. Ausserdem bedarf die Regenierung des gewünschten Bildfarbstoffes einer speziellen Behandlung in einem stark alkalischen Medium. Andere wasserunlösliche Azofarbstoffe, die in Silberfarbbleichmaterialien eingearbeitet wurden, sind nur schwer zugänglich und zeigen eine zu geringe Stabilität gegen pH-Wertänderungen und Lichteinwirkung (US-Patentschrift 3 544 326 ; Research Disclosure 14983, September 1976).

Weitere wasserunlösliche Azofarbstoffe sind z. B. auch aus den französischen Patentanmeldungen 1 399 253 und 2 130 599 und der deutschen Patentschrift 695 348 bekannt. Diese betreffen Azofarbstoffe die Phenol- oder Naphtholkupplungskomponenten enthalten. Wasserunlösliche Azofarbstoffe aus der Stilbenreihe sind in der deutschen Offenlegungsschrift 2 015 708 beschrieben.

Aufgabe der vorliegenden Erfindung ist somit die Bereitstellung von neuen Disazofarbstoffen zur Verwendung in farbphotographischen Aufzeichnungsmaterialien für das Silberfarbbleichverfahren, die sich gut in die Schichten der Aufzeichnungsmaterialien einarbeiten lassen und aufgrund ihrer Echtheiten zu einem Material führen, das Abbildungen verbesserter Qualität liefert.

Es wurden nun öllösliche Disazofarbstoffe für die Verwendung in photographischen Schichten von Silberfarbbleichmaterialien gefunden, die dem Aufzeichnungsmaterial die gewünschten Eigenschaften verleihen und photographische Bilder hoher Qualität liefern.

Gegenstand der vorliegenden Erfindung sind daher Verbindungen der Formel

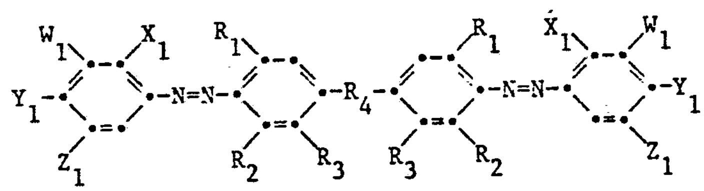

(1)

worin

$X_1$ Wasserstoff, Alkyl oder Alkoxy mit je 1 bis 6 Kohlenstoffatomen, $—NL_1COM_1$, worin $L_1$ Wasserstoff oder Alkyl mit 1 bis 4 Kohlenstoffatomen und $M_1$ gegebenenfalls mit Carbalkoxy mit 2 bis 5 Kohlenstoffatomen oder mit Alkoxy mit 1 bis 4 Kohlenstoffatomen substituiertes Alkyl oder Alkoxy mit 1 bis 20 Kohlenstoffatomen ist, oder $X_1$ $—NL_1P(O)(OG_1)_2$, worin $L_1$ die oben angegebene Bedeutung hat und $G_1$ Alkyl mit 1 bis 12 Kohlenstoffatomen ist, oder $X_1$ Alkylsulfonamid mit 1 bis 20 Kohlenstoffatomen oder Hydroxyl,

$Y_1$ Wasserstoff, Alkyl mit 1 bis 6 Kohlenstoffatomen, Alkoxy mit 1 bis 12 Kohlenstoffatomen, $—(OC_2H_4)_{n1}—OU_1$, worin $U_1$ Wasserstoff, Alkyl mit 1 bis 6 Kohlenstoffatomen oder Phenyl und $n_1$ 1, 2 oder 3 ist, oder $Y_1$ N-alkyl- oder N,N-dialkylsubstituiertes Amino, wobei die Alkylteile je 1 bis 8 Kohlenstoffatome enthalten und gegebenenfalls mit elektronegativen Gruppen substituiert sind, oder $Y_1$ $—NL_2COM_2$, worin $L_2$ Wasserstoff oder Alkyl mit 1 bis 6 Kohlenstoffatomen, und $M_2$ Alkyl mit 1 bis 12 Kohlenstoffatomen, Alkoxy, mit 1 bis 4 Kohlenstoffatomen oder $—O—(C_2H_4O)_{n1}—U_2$ ist, worin $U_2$ Alkyl mit 1 bis 8 Kohlenstoffatomen ist und $n_1$ die oben angegebene Bedeutung hat,

$Z_1$ Wasserstoff, Alkyl mit 1 bis 12 Kohlenstoffatomen, $—CH_2CO_2R_5$, worin $R_5$ Alkyl mit 1 bis 8 Kohlenstoffatomen oder $—(C_2H_4O)_{n1}—U_1$ ist, worin $U_1$ et $n_1$ die oben angegebenen Bedeutungen haben, oder $Z_1$ Alkoxy mit 1 bis 8 Kohlenstoffatomen, $—(OC_2H_4)_{n1}—OU_1$, worin $U_1$ und $n_1$ die oben angegebenen Bedeutungen haben oder $Z_1$ $—NL_2COM_3$, worin $L_2$ die oben angegebenen Bedeutungen

hat und $M_3$ Alkyl mit 1 bis 18 Kohlenstoffatomen ist, oder $Z_1$ Carbalkoxy mit 2 bis 19 Kohlenstoffatomen, $—CO(OC_2H_4)_{n1}—OU_1$, worin $U_1$ und $n_1$ die oben angegebenen Bedeutungen haben, oder $Z_1$ Halogen oder diejenigen Atome bedeutet, um zusammen mit $Y_1$ einen gegebenenfalls mit Alkyl mit 1 bis 4 Kohlenstoffatomen substituierten, 5- oder 6-gliedrigen, gesättigten oder ungesättigten Ring zu bilden,

$W_1$ Wasserstoff, Alkyl oder Alkoxy mit je 1 bis 4 Kohlenstoffatomen ist,

$R_1$ und $R_2$ unabhängig voneinander Wasserstoff, Halogen, Cyano, Nitro oder $—SO_2U_3$ sind, worin $U_3$ gegebenenfalls mit Hydroxyl oder Alkoxy mit 1 bis 6 Kohlenstoffatomen substituiertes Alkyl mit 1 bis 6 Kohlenstoffatomen oder Phenyl ist,

$R_4$ die direkte chemische Bindung oder ein Brückenglied der Formel —O—, —CO—, $—SO_2—$, $—(CH_2)_{m1}—$, worin $m_1$ ganze Zahlen von 1 bis 8 bedeutet, oder —CH=CH— ist,

$R_3$ Wasserstoff oder Alkyl mit 1 bis 12 Kohlenstoffatomen ist oder beide Reste $R_3$ zusammen ein Brückenglied der Formel $—CH_2—$ oder —CO— sein können, wenn $R_4$ die direkte chemische Bindung ist, und

mindestens zwei der Substituenten $W_1$, $X_1$, $Y_1$ und $Z_1$ von Wasserstoff verschieden sind, $X_1$ von Hydroxyl verschieden ist, wenn $Z_1$ Wasserstoff ist, und $Z_1$ von Methyl, tert.-Butyl und iso-Hexyl verschieden ist, wenn $R_4$ die direkte chemische Bindung, —O—, $—CH_2—$ oder —CH=CH— ist, und die Verbindung der Formel

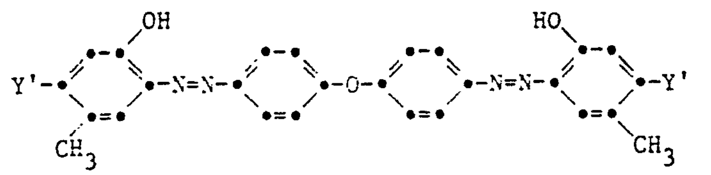

(100)

worin die Substituenten Y' jeweils $—OC_2H_4CH(CH_3)_2$, $—OC_2H_4OC_4H_9$, $—OC_2H_4OC_2H_4OCH_3$ oder $—OC_3H_7$ sind.

Gegenstand der Erfindung ist ferner die Verwendung der Verbindungen als Bildfarbstoffe in farbphotographischen Aufzeichnungsmaterialien für das Silberfarbbleichverfahren.

Gegenstand der Erfindung ist auch ein farbphotographisches Aufzeichnungsmaterial für das Silberfarbbleichverfahren, das diese Verbindungen enthält, ein Verfahren zur Herstellung der Verbindungen, sowie die mit dem Material hergestellten photographischen Bilder.

Der Substituent $X_1$ in Formel (1) ist Wasserstoff, Hydroxyl oder Alkyl mit 1 bis 6 Kohlenstoffatomen. Die Alkylreste können geradkettig oder verzweigt sein. Beispielsweise kommen in Betracht: Methyl, Aethyl, Propyl, i-Propyl, Butyl, 3-Methylpropyl, 1-Methylpropyl, tert.-Butyl, Pentyl, 1,1-Dimethylpropyl, 3,3-Dimethylpropyl, Hexyl, 4,4-Dimethylbutyl oder 1,3-Dimethylbutyl.

Bevorzugte Alkylreste sind Methyl und Aethyl, insbesondere Methyl.

Hydroxyl ist ein sehr geeigneter Rest.

Bedeutet $X_1$ Alkoxy mit 1 bis 6 Kohlenstoffatomen, so können als Alkoxyreste die den genannten Alkylresten analogen Reste in Frage kommen.

Bevorzugte Alkoxyreste sind Methoxy und Aethoxy, insbesondere Methoxy.

Ferner bedeutet $X_1$ einen Rest der Formel $—NL_1COM_1$. Darin ist $L_1$ Wasserstoff oder Alkyl mit 1 bis 4 Kohlenstoffatomen, wie z. B. Methyl, Aethyl, Propyl, i-Propyl, Butyl, 1-Methylpropyl, 3-Methylbutyl oder tert.-Butyl. Bevorzugte Alkylreste sind Methyl, Aethyl und Propyl, wovon Methyl besonders geeinget ist. Auch Wasserstoff ist ein sehr geeigneter Rest. $M_1$ ist Alkyl mit 1 bis 20 Kohlenstoffatomen, wobei die Alkylreste geradkettig oder verzweigt sein können. Beispiele für solche Alkylreste sind: Methyl, Aethyl, Propyl, i-Propyl, Butyl, 1-Methylpropyl, 3-Methylpropyl, tert.-Butyl, Pentyl, 1,1-Dimethylpropyl, 3,3-Dimethylpropyl, Hexyl, 1,1,3,3-Tetramethylbutyl, 1-Methyläthylpentyl, 1-Methylpentyl, Neopentyl, 1-, 2- oder 3-Methylhexyl, Heptyl, n-Octyl, tert.-Octyl, 2-Aethylhexyl, n-Nonyl, Isononyl, tert.-Nonyl, Decyl, tert.-Decyl; Undecyl, Dodecyl, Tetradecyl, Hexadecyl, Octadecyl oder Eicosyl sowie die dazugehörenden Isomeren.

Bevorzugte Alkylreste besitzen 1 bis 16 Kohlenstoffatome. Besonders geeignete Alkylreste weisen 1 bis 8 Kohlenstoffatome auf. Alle genannten Alkylreste können mit Carbalkoxy mit 2 bis 5 Kohlenstoffatomen oder mit Alkoxy mit 1 bis 4 Kohlenstoffatomen substituiert sein, wobei der Alkoxyteil sowie die Alkoxyreste geradkettig oder verzweigt sein können. $M_1$ bedeutet ferner Alkoxy mit 1 bis 20 Kohlenstoffatomen. Es können als Alkoxyreste die den genannten Alkylresten analogen Reste in Frage kommen. Diese können mit Carbalkoxy mit 2 bis 5 Kohlenstoffatomen oder mit Alkoxy mit 1 bis 4 Kohlenstoffatomen weiter substituiert sein.

Ferner ist $X_1$ ein Rest der Formel $—NL_1O(O)(OG_1)_2$. Darin hat $L_1$ die oben angegebene Bedeutung. $G_1$ ist Alkyl mit 1 bis 12, insbesondere 1 bis 8 Kohlenstoffatomen. Besonders geeignete Alkylreste enthalten 1 bis 4 Kohlenstoffatome. Beispiele für in Frage kommende Alkylreste sind in den Erläuterungen von $M_1$ gegeben.

Ist $X_1$ Alkylsulfonamid, so enthält der Alkylteil 1 bis 20, insbesondere 1 bis 16 Kohlenstoffatome. Vorzugsweise besitzt der Alkylteil 1 bis 12 Kohlenstoffatome. Beispiele für in Betracht kommende Alkylreste sind in den Erläuterungen von $M_1$ gegeben.

$Y_1$ ist Wasserstoff oder Alkyl mit 1 bis 6, insbesondere 1 bis 4 Kohlenstoffatomen. Beispiele geeigneter Alkylreste finden sich in den Erläuterungen von $X_1$.

$Y_1$ ist ferner Alkoxy mit 1 bis 12, insbesondere 1 bis 8 Kohlenstoffatomen. In Frage kommende Alkoxyreste sind in den Erläuterungen von $M_1$ aufgezählt.

Ist $Y_1$ ein Rest der Formel $—(OC_2H_4)_{n1}—OU_1$, so ist $n_1$ 1, 2 oder 3, insbesondere 1 oder 2. $U_1$ bedeutet Wasserstoff, Phenyl oder Alkyl mit 1 bis 6 Kohlenstoffatomen. In den Erläuterungen von $X_1$ sind Beispiele in Frage kommender Alkylreste aufgezählt.

Bedeutet $Y_1$ N-alkyl- oder N,N-dialkylsubstituiertes Amino, so enthalten die Alkylreste je 1 bis 8 Kohlenstoffatome. Geeignete Alkylreste sind die für $X_1$ aufgezählten Reste sowie Heptyl, Octyl und tert.-Octyl. Diese Alkylreste können mit elektronegativen Gruppen, wie z. B. Methoxy, Aethoxy, Acetoxy, Hydroxyl oder Cyano substituiert sein. Bevorzugte elektronegative Substituenten sind Methoxy, Aethoxy, Hydroxyl und Cyano. Ganz besonders geeignet sind Methoxy, und Cyano.

Desweiteren ist $Y_1$ ein Rest der Formel $—NL_2COM_2$, worin $L_2$ Wasserstoff oder Alkyl mit 1 bis 6 Kohlenstoffatomen ist. Beispiele geeigneter Alkylreste sind in den Erläuterungen von $X_1$ aufgeführt. $M_2$ bedeutet Alkyl mit 1 bis 12, insbesondere 1 bis 6 Kohlenstoffatomen. Die Erläuterungen von $M_1$ enthalten geeignete Beispiele für in Frage kommende Alkylreste. Ferner bedeutet $M_2$ Alkoxy mit 1 bis 4 Kohlenstoffatomen, wobei z. B. Methoxy, Aethoxy, Propoxy, Butoxy, tert.-Butoxy, 1-Methylpropoxy oder 3-Methylpropoxy in Frage kommen können. Ist $M_2$ $—O—(C_2H_4O)_{n1}—U_2$, so hat $n_1$ die oben angegebene Bedeutung. $U_2$ ist Alkyl mit 1 bis 8, insbesondere 1 bis 4 Kohlenstoffatomen. Geeignete Alkylreste sind in der Erläuterung von $M_1$ aufgezählt. Methyl ist ein bevorzugter Alkylrest.

$Z_1$ bedeutet Wasserstoff oder Alkyl mit 1 bis 12, insbesondere 1 bis 8 Kohlenstoffatomen. Die Erläuterung von $M_1$ enthält Beispiele geeigneter Alkylreste.

Desweiteren ist $Z_1$ ein Rest der Formel $—CH_2CO_2R_5$, worin $R_5$ Alkyl mit 1 bis 8, insbesondere 1 bis 4 Kohlenstoffatomen ist. Beispiele sind in den Erläuterungen von $M_1$ zu finden. Ferner ist $R_5$ $—(C_2H_4O)_{n1}—U_1$, worin $U_1$ und $n_1$ die oben angegebenen Bedeutungen haben.

Ist $Z_1$ Alkoxy, so enthalten diese Reste 1 bis 8, insbesondere 1 bis 5 Kohlenstoffatome. Geeignete Alkoxyreste können der Erläuterung von $M_1$ entnommen werden.

$Z_1$ bedeutet auch einen Rest der Formel $—(OC_2H_4)_{n1}—OU_1$, worin $U_1$ und $n_1$ die oben angegebenen Bedeutungen haben.

$Z_1$ ist ferner ein Rest der Formel $—NL_2COM_3$. Darin hat $L_2$ die oben angegebene Bedeutung und $M_3$ ist Alkyl mit 1 bis 18, insbesondere 1 bis 12 Kohlenstoffatomen. Besonders geeignete Alkylreste enthalten 1 bis 8 Kohlenstoffatome. Als Alkylreste können in den Erläuterungen für $M_1$ genannte Alkylreste in Frage kommen.

$Z_1$ bedeutet Carbalkoxy mit 2 bis 19, insbesondere mit 2 bis 12 Kohlenstoffatomen, wobei Beispiele für die Alkyl- bzw. Alkoxyreste den Erläuterungen von $M_1$ entnommen werden können. Carbalkoxy mit 2 bis 5 Kohlenstoffatomen ist besonders bevorzugt.

Ist $Z_1$ $—CO(OC_2H_4)_{n1}—OU_1$, so haben $U_1$ und $n_1$ die oben angegebenenen Bedeutungen.

Bedeutet $Z_1$ Halogen wie z. B. Fluor, Chlor oder Brom, so sind Chlor und Brom bevorzugt.

$Z_1$ bildet mit $Y_1$ und den Kohlenstoffatomen, an die $Z_1$ und $Y_1$ gebunden sind, einen 5- bis 6-gliedrigen Ring, der gesättigt oder ungesättigt sein kann. Dieser Ring kann mit Alkylsubstituenten mit 1 bis 4 Kohlenstoffatomen, insbesondere Methyl, substituiert sein.

$W_1$ ist Wasserstoff oder Alkyl oder Alkoxy mit je 1 bis 4 Kohlenstoffatomen, wie z. B. Methyl, Aethyl, Propyl, Butyl, tert.-Butyl oder Methoxy, Aethoxy, Propoxy, Butoxy oder tert.-Butoxy. Methyl und Methoxy sind besonders geeignet.

$R_1$ und $R_2$ sind unabhängig voneinander Wasserstoff, Halogen, z. B. Chlor oder Brom ; Cyano, Nitro sowie ein Rest der Formel $—SO_2U_3$. $U_3$ bedeutet Alkyl mit 1 bis 6, insbesondere 1 bis 4 Kohlenstoffatomen. Geeignete Beispiele sind in der Erläuterung von $X_1$ aufgezählt. Methyl ist besonders geeignet. Die Alkylreste können mit Hydroxyl oder Alkoxy mit 1 bis 6 Kohlenstoffatomen weiter substituiert sein. In Frage kommende Alkoxyreste sind in der Erläuterung von $X_1$ beschrieben. Methoxy ist besonders bevorzugt. $U_3$ ist ferner Phenyl.

$R_3$ ist Wasserstoff oder Alkyl mit 1 bis 12, insbesondere 1 bis 8 Kohlenstoffatomen. Alkylreste mit 1 bis 6 Kohlenstoffatomen, vorzugsweise mit 1 bis 4 Kohlenstoffatomen sind besonders geeignet. Wertvolle Alkylreste sind Methyl und Aethyl. Weitere Beispiele geeigneter Alkylreste finden sich in den Erläuterungen von $M_1$. Beide Reste $R_3$ können ein Brückenglied der Formel $—CH_2—$ oder $—CO—$ bilden, wenn $R_4$ die direkte chemische Bindung bedeutet.

$R_4$ bedeutet die direkte chemische Bindung oder ein Brückenglied der Formel $—O—$, $—CO—$, $—SO_2—$, $—(CH_2)_{m1}—$, worin $m_1$ ganze Zahlen von 1 bis 8, insbesondere 1 bis 6 ist ; oder $—CH{=}CH—$.

$—CO—$, $—SO_2—$, $—CH_2—$ und $—CH{=}CH—$ sind besonders geeignete Reste $R_4$. $—CO—$ und $—SO_2—$ sind die bevorzugten Brückenglieder.

Von den Substituenten $X_1$, $Y_1$, $Z_1$ und $W_1$ müssen mindestens zwei von Wasserstoff verschieden sein.

Von den öllöslichen Disazofarbstoffen der Formel (1) sind solche bevorzugt, worin $X_1$ Alkyl oder Alkoxy mit je 1 bis 6 Kohlenstoffatomen, $—NL_1COM_1$, worin $L_1$ Wasserstoff oder Alkyl mit 1 bis 4 Kohlenstoffatomen und $M_1$ gegebenenfalls mit Carbalkoxy mit 2 bis 5 Kohlenstoffatomen oder mit Alkoxy mit 1 bis 4 Kohlenstoffatomen substituiertes Alkyl oder Alkoxy mit 1 bis 20 Kohlenstoffatomen ist, oder $X_1$ $—NL_1P(O)(OG_1)_2$, worin $L_1$ die oben angegebene Bedeutung hat und $G_1$ Alkyl mit 1 bis 12 Kohlenstoffatomen ist ; oder $X_1$ Alkylsulfonamid mit 1 bis 20 Kohlenstoffatomen oder Hydroxyl, $Z_1$ Alkyl mit 1 bis 12

Kohlenstoffatomen, $—CH_2CO_2R_5$, worin $R_5$ Alkyl mit 1 bis 8 Kohlenstoffatomen oder $—(C_2H_4O)_{n1}—U_1$ ist, worin $U_1$ und $n_1$ die oben angegebenen Bedeutungen haben, oder $Z_1$ Alkoxy mit 1 bis 8 Kohlenstoffatomen, $—(OC_2H_4)_{n1}—OU_1$, worin $U_1$ und $n_1$ die oben angegebenen Bedeutungen haben, oder $Z_1$ $—NL_2COM_3$, worin $L_2$ die oben angegebenen Bedeutungen hat, und $M_3$ Alkyl mit 1 bis 18 Kohlenstoffatomen ist, oder $Z_1$ Carbalkoxy mit 2 bis 19 Kohlenstoffatomen, $—CO(OC_2H_4)_{n1}—OU_1$, worin $U_1$ und $n_1$ die oben angegebenen Bedeutungen haben, oder $Z_1$ Halogen oder diejenigen Atome bedeutet, um zusammen mit $Y_1$ einen gegebenenfalls mit Alkyl mit 1 bis 4 Kohlenstoffatomen substituierten, 5- oder 6-gliedrigen, gesättigten oder ungesättigten Ring zu bilden, und $Y_1$, $W_1$, $R_1$, $R_2$, $R_3$ und $R_4$ die oben angegebenen Bedeutungen haben, wobei mindestens einer der Substituenten $W_1$, $Y_1$ und $Z_1$ von Wasserstoff verschieden ist, und $X_1$ von Hydroxyl verschieden ist, wenn $Z_1$ Wasserstoff ist, und $Z_1$ von Methyl, tert.-Butyl und iso-Hexyl verschieden ist, wenn $R_4$ die direkte chemische Bindung, —O—, $—CH_2—$ oder —CH=CH— ist, und die Verbindungen der Formel (100).

Bevorzugte öllösliche Disazofarbstoffe sind solche der Formel

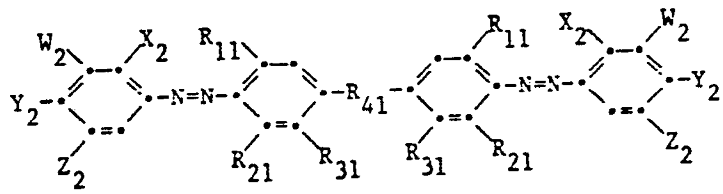
(2)

worin

$X_2$ Methoxy, $—NL_{11}COM_{11}$, worin $L_{11}$ Wasserstoff oder Methyl und $M_{11}$ gegebenenfalls mit Carbalkoxy mit 2 bis 5 Kohlenstoffatomen oder mit Aethoxy oder Methoxy substituiertes Alkyl oder Alkoxy mit 1 bis 16 Kohlenstoffatomen ist, oder $X_2$ $—NL_{11}P(O)(OG_{11})_2$, worin $L_{11}$ die oben angegebene Bedeutung hat und $G_{11}$ Alkyl mit 1 bis 8 Kohlenstoffatomen ist, oder $X_2$ Alkylsulfon amid mit 1 bis 16 Kohlenstoffatomen oder Hydroxyl,

$Y_2$ Wasserstoff, Alkyl mit 1 bis 4 Kohlenstoffatomen, Alkoxy mit 1 bis 12 Kohlenstoffatomen, $—(OC_2H_4)_{n1}—OU_{11}$, worin $U_{11}$ Wasserstoff, Alkyl mit 1 bis 4 Kohlenstoffatomen oder Phenyl ist und $n_1$ die oben angegebene Bedeutung hat, oder $Y_2$ N-alkyl- oder N,N-dialkylsubstituiertes Amino, wobei die Alkylteile je 1 bis 8 Kohlenstoffatome enthalten und gegebenenfalls mit Methoxy, Aethoxy, Acetoxy, Hydroxyl oder Cyano substituiert sind, oder $Y_2$ $—NL_{21}COM_{21}$, worin $L_{21}$ Wasserstoff oder Alkyl mit 1 bis 4 Kohlenstoffatomen ist und $n_1$ die oben angegebene Bedeutung hat,

$Z_2$ Wasserstoff, Alkyl mit 1 bis 8 Kohlenstoffatomen, $—CH_2CO_2R_{51}$, worin $R_{51}$ Alkyl mit 1 bis 8 Kohlenstoffatomen, $—CH_2CO_2R_{51}$, worin $R_{51}$ Alkyl mit 1 bis 8 Kohlenstoffatomen oder $—(C_2H_4O)_{n1}—U_{11}$ ist, worin $U_{11}$ und $n_1$ die oben angegebenen Bedeutungen haben, oder $Z_2$ ist Alkoxy mit 1 bis 8 Kohlenstoffatomen, $—(OC_2H_4)_{n1}—OU_{11}$, worin $U_{11}$ und $n_1$ die oben angegebenen Bedeutungen haben ; $—NL_{21}COM_{31}$, worin $L_{21}$ die oben angegebene Bedeutung hat und $M_{31}$ Alkyl mit 1 bis 12 Kohlenstoffatomen ist ; oder $Z_2$ Carbalkoxy mit 2 bis 12 Kohlenstoffatomen, $—CO(OC_2H_4)_{n1}—OU_{11}$, worin $U_{11}$ und $n_1$ die oben angegebenen Bedeutungen haben ; oder $Z_2$, Chlor, Brom oder diejenigen Atome bedeutet, um zusammen mit $Y_2$ einen gegebenenfalls methylsubstituierten, 6-gliedrigen, gesättigten, gegebenenfalls 1 oder 2 Heteroatome enthaltenden Ring zu bilden,

$W_2$ Wasserstoff oder Methyl ist,

$R_{11}$ und $R_{21}$ unabhängig voneinander Wasserstoff, Chlor, Brom, Cyano, Nitro oder $—SO_2U_{31}$ sind, worin $U_{31}$ gegebenenfalls mit Hydroxyl oder Methoxy substituiertes Alkyl mit 1 bis 4 Kohlenstoffatomen oder Phenyl ist,

$R_{41}$ die direkte chemische Bindung oder ein Brückenglied der Formel —O—, —CO—, $—SO_2—$, $—(CH_2)_{m2}—$, worin $m_2$ eine ganze Zahl von 1 bis 6 ist, oder —CH=CH— ist,

$R_{31}$ Wasserstoff oder Alkyl mit 1 bis 8 Kohlenstoffatomen ist oder beide Reste $R_{31}$ zusammen ein Brückenglied der Formel $—CH_2—$ oder —CO— sein können, wenn $R_{41}$ die direkte chemische Bindung ist, und

mindestens einer der Substituenten $Y_2$, $Z_2$, $W_2$ von Wasserstoff verschieden ist, und $X_2$ von Hydroxyl verschieden ist, wenn $Z_2$ Wasserstoff ist, und $Z_2$ von Methyl, tert.-Butyl und iso-Hexyl verschieden ist, wenn $R_{41}$ die direkte chemische Bindung, —O—, $—CH_2—$ oder —CH=CH— ist, und die Verbindung der Formel (100).

Geeignete Verbindungen der Formel (2) sind die Verbindungen der Formel

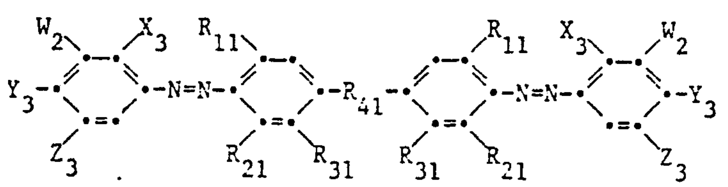
(3)

worin

$X_3$ Methoxy, $—NHCOM_{12}$, worin $M_{12}$ gegebenenfalls mit Carbalkoxy mit 2 bis 5 Kohlenstoffatomen oder mit Methoxy oder Aethoxy substituiertes Alkyl mit 1 bis 16 Kohlenstoffatomen ist, oder $X_3$ $—NHP(O)(OG_{12})_2$, worin $G_{12}$ Alkyl mit 1 bis 4 Kohlenstoffatomen ist, oder $X_3$ Alkylsulfonamid mit 1 bis 12 Kohlenstoffatomen oder Hydroxyl,

$Y_3$ Wasserstoff, Alkoxy mit 1 bis 12 Kohlenstoffatomen, $—(OC_2H_4)_{n2}—OU_{12}$, worin $U_{12}$ Wasserstoff oder Alkyl mit 1 bis 4 Kohlenstoffatomen und $n_2$ 1 oder 2 ist, oder $Y_3$ N-alkyl- oder N,N-dialkylsubstituiertes Amino, wobei die Alkylteile je 1 bis 8 Kohlenstoffatome enthalten und gegebenenfalls mit Methoxy, Aethoxy, Acetoxy, Hydroxyl oder Cyano substituiert sind ; oder $Y_3$ $—NHCOM_{22}$, worin $M_{22}$ Alkyl mit 1 bis 4 Kohlenstoffatomen, Methoxy oder $—O—(C_2H_4O)_{n2}—CH_3$ ist, worin $n_2$ die oben angegebene Bedeutung hat,

$Z_3$ Wasserstoff, Alkyl mit 1 bis 8 Kohlenstoffatomen, $—CH_2CO_2R_{52}$, worin $R_{52}$ Alkyl mit 1 bis 8 Kohlenstoffatomen oder $—(C_2H_4O)_{n2}—U_{12}$ ist, worin $U_{12}$ und $n_2$ die oben angegebenen Bedeutungen haben, ferner $Z_3$ Alkoxy mit 1 bis 8 Kohlenstoffatomen, $—(OC_2H_4)_{n2}—OU_{12}$, worin $U_{12}$ und $n_2$ die oben angegebene Bedeutung haben ; $—NL_{21}COM_{32}$, worin $L_{21}$ die oben angegebene Bedeutung hat und $M_{32}$ Alkyl mit 1 bis 8 Kohlenstoffatomen ist, oder $Z_3$ Carbalkoxy mit 2 bis 5 Kohlenstoffatomen oder $—CO(OC_2H_4)_{n2}—OU_{11}$ ist, worin $U_{11}$ und $n_2$ die oben angegebene Bedeutung haben,

$W_2$, $R_{11}$, $R_{21}$, $R_{31}$ und $R_{41}$ die oben angegebene Bedeutung haben, und mindestens einer der Substituenten $Y_3$, $Z_3$, $W_2$ von Wasserstoff verschieden ist, und $X_3$ von Hydroxyl verschieden ist, wenn $Z_3$ Wasserstoff ist, und $Z_3$ von Methyl, tert.-Butyl und iso-Hexyl verschieden ist, wenn $R_{41}$ die direkte chemische Bindung, —O—, $—CH_2—$ oder —CH=CH— ist, und die Verbindungen der Formel (100).

Bevorzugt sind auch Verbindungen der Formel

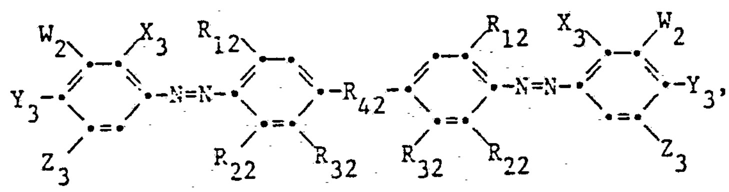

(4)

worin

$R_{12}$ und $R_{22}$ unabhängig voneinander Wasserstoff, Chlor, Brom, Cyano, Nitro oder Methylsulfon sind,

$R_{42}$ die direkte chemische Bindung oder ein Brückenglied der Formel —O—, —CO—, $—SO_2—$, $—(CH_2)_{m2}—$, worin $m_2$ die oben angegebene Bedeutung hat, oder —CH=CH— ist,

$R_{32}$ Wasserstoff oder Alkyl mit 1 bis 4 Kohlenstoffatomen ist oder die beiden Reste $R_{32}$ ein Brückenglied der Formel $—CH_2—$ oder —CO— sein können, wenn $R_{42}$ die direkte chemische Bindung bedeutet,

$X_3$, $Y_3$, $Z_3$ und $W_2$ die oben angegebenen Bedeutungen haben und mindestens einer der Substituenten $Y_3$, $Z_3$, $W_2$ von Wasserstoff verschieden ist, und $X_3$ von Hydroxyl verschieden ist, wenn $Z_3$ Wasserstoff ist, und $Z_3$ von Methyl, tert.-Butyl und iso-Hexyl verschieden ist, wenn $R_{42}$ die direkte chemische Bindung, —O—, $—CH_2—$ oder —CH=CH— ist, und die Verbindungen der Formel (100).

Von Interesse sind Verbindungen der Formel

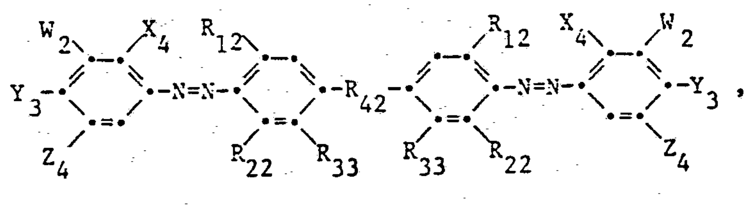

(5)

worin

$X_4$ $—NHCOM_{12}$ oder $—NHP(O)(OG_{12})_2$, worin $M_{12}$ und $G_{12}$ die oben angegebenen Bedeutungen haben, oder Hydroxyl,

$Z_4$ Wasserstoff, Alkyl oder Alkoxy mit 1 bis 8 Kohlenstoffatomen, $—CH_2CO_2R_{53}$, worin $R_{53}$ Alkyl mit 1 bis 4 Kohlenstoffatomen, $—(C_2H_4O)_2—CH_3$ oder $—C_2H_4O—CH_3$ ist, $—(OC_2H_4)_{n2}—OU_{12}$ oder $—NL_{21}COM_{32}$ ist, worin $U_{12}$, $n_2$, $L_{21}$ und $M_{32}$ die oben angegebenen Bedeutungen haben,

$R_{33}$ Wasserstoff oder Methyl ist oder die beiden Reste $R_{33}$ zusammen ein Brückenglied der Formel $—CH_2—$ oder —CO— sein können, wenn $R_{42}$ die direkte chemische Bindung ist,

$W_2$, $Y_3$, $R_{12}$, $R_{22}$ und $R_{42}$ die oben angegebenen Bedeutungen haben, und mindestens einer der Substituenten $W_2$, $Y_3$ und $Z_4$ von Wasserstoff verschieden ist, und $X_4$ von Hydroxyl verschieden ist, wenn $Z_4$ Wasserstoff ist, und $Z_4$ von Methyl, tert.-Butyl und iso-Hexyl verschieden ist, wenn $R_{42}$ die direkte chemische Bindung, —O—, $—CH_2—$ oder —CH=CH— ist, und die Verbindung der Formel (100).

Wertvolle Verbindungen der Formel (5) sind nun solche der Formel

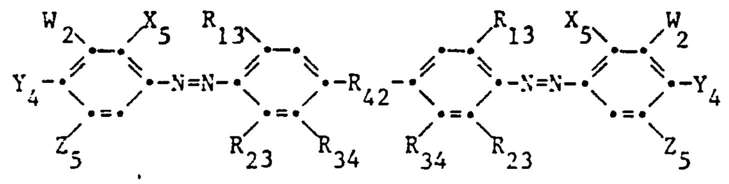

(6)

worin

$X_5$ —$NHCOM_{13}$, worin $M_{13}$ Alkyl mit 1 bis 16 Kohlenstoffatomen ist, —$NHP(O)\ (OG_{12})_2$, worin $G_{12}$ die oben angegebene Bedeutung hat, oder Hydroxyl,

$Y_4$ Wasserstoff, Alkoxy mit 1 bis 8 Kohlenstoffatomen, —$(OC_2H_4)_{n2}$—$OU_{13}$, worin $U_{13}$ Methyl oder Aethyl ist und $n_2$ die oben angegebene Bedeutung hat, oder $Y_4$ N-alkyl- oder N,N-dialkylsubstituiertes Amino, wobei die Alkylteile je 1 bis 8 Kohlenstoffatome enthalten und gegebenenfalls mit Methoxy, Aethoxy, Hydroxyl oder Cyano substituiert sind,

$Z_5$ Wasserstoff, Alkyl oder Alkoxy mit 1 bis 5 Kohlenstoffatomen, —$CH_2CO_2R_{53}$, worin $R_{53}$ die oben angegebene Bedeutung hat, oder $Z_5$ —$(OC_2H_4)_2$—$OCH_3$, —$(OC_2H_4)_2$—OH, —$OC_2H_4$—OH oder —$OC_2H_4$—$OCH_3$ oder —$N(CH_3)COM_{32}$, worin $M_{32}$ die oben angegebene Bedeutung hat,

$R_{13}$ und $R_{23}$ unabhängig voneinander Wasserstoff, Chlor, Brom, Cyano, Nitro oder Methylsulfon sind,

$R_{34}$ Wasserstoff oder Methyl ist, oder die beiden Reste $R_{34}$ zusammen ein Brückenglied der Formel —$CH_2$— oder —CO— sein können, wenn $R_{42}$ die direkte chemische Bindung ist,

$W_2$ und $R_{42}$ die oben angegebenen Bedeutungen haben, und mindestens einer der Substituenten $W_2$, $Y_4$ und $Z_5$ von Wasserstoff verschieden ist, und $X_5$ von Hydroxyl verschieden ist, wenn $Z_5$ Wasserstoff ist, und $Z_5$ von Methyl und tert.Butyl verschieden ist, wenn $R_{42}$ die direkte chemische Bindung, —O—, —$CH_2$— oder —CH=CH— ist, und die Verbindungen der Formel (100).

Besonders interessante Verbindungen der Formel (6) sind Verbindungen der Formel

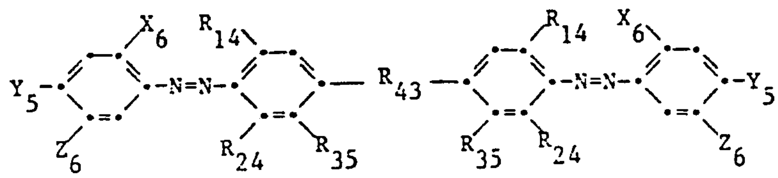

(7)

worin

$X_6$ —$NHCOM_{13}$ oder —$NHP(O)\ (OG_{12})_2$, worin $M_{13}$ und $G_{12}$ die oben angegebenen Bedeutungen haben,

$Y_5$ N-alkyl- oder N,N-dialkylsubstituiertes Amino, worin die Alkylteile je 1 bis 8 Kohlenstoffatome enthalten und gegebenenfalls mit Methoxy oder Aethoxy substituiert sind,

$Z_6$ Wasserstoff, Alkoxy mit 1 bis 5 Kohlenstoffatomen, —$(OC_2H_4)_2$—$OCH_3$, —$(OC_2H_4)_2$—OH, —$OC_2H_4OCH_3$ oder —$OC_2H_4$—OH ist,

$R_{14}$ und $R_{24}$ unabhängig voneinander Wasserstoff, Chlor oder Brom sind,

$R_{35}$ Wasserstoff oder die beiden Reste $R_{35}$ zusammen ein Brückenglied der Formel —$CH_2$— oder —CO— sein können, wenn $R_{43}$ die direkte chemische Bindung ist, und

$R_{43}$ die direkte chemische Bindung oder ein Brückenglied der Formel —CO—, —$SO_2$— oder —CH = CH— ist,

und $Z_6$ von Methyl und tert.Butyl verschieden ist, wenn $R_{43}$ die direkte chemische Bindung oder —CH = CH— ist, und die Verbindungen der Formel (100).

Besonders wertvolle Verbindungen der Formel (6) sind die Verbindungen der Formel

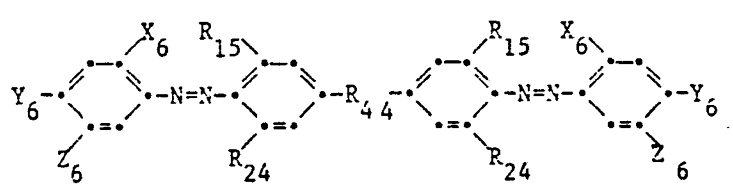

(8)

worin

$Y_6$ N,N-dialkylsubstituiertes Amino ist, worin die Alkylteile je 1 bis 8 Kohlenstoffatome enthalten und gegebenenfalls mit Methoxy, Aethoxy oder Cyano substituiert sind,

$R_{15}$ und $R_{24}$ unabhängig voneinander Cyano, Nitro oder Methylsulfon sind,

$R_{44}$ die direkte chemische Bindung oder ein Brückenglied der Formel —CO— oder —SO— ist, und

$X_6$ und $Z_6$ die oben angegebenen Bedeutungen haben, und $Z_6$ von Methyl und tert.Butyl verschieden ist, wenn $R_{44}$ die direkte chemische Bindung ist, und die Verbindungen der Formel (100).

Besonders bevorzugte Verbindungen der Formel (6) sind die Verbindungen der Formel

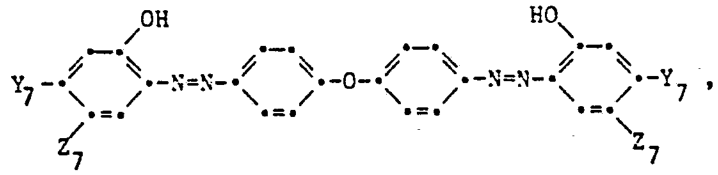

(9)

worin

$Y_7$ Alkoxy mit 1 bis 8 Kohlenstoffatomen oder $-(OC_2H_4)_{n2}-OU_{13}$, worin $n_2$ und $U_{13}$ die oben angegebenen Bedeutungen haben, und

$Z_7$ Alkyl mit 1 bis 5 Kohlenstoffatomen ausser Methyl und tert.Butyl ist.

Besonders bevorzugte Verbindungen der Formel (9) sind die Verbindungen der Formel

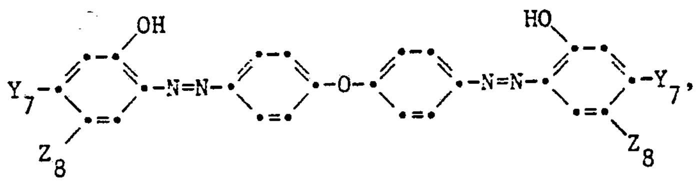

(10)

worin

$Z_8$ Alkyl oder Propyl ist und

$Y_7$ die oben angegebene Bedeutung hat.

Die Farbstoffe können auf Grund ihrer Unlöslichkeit in Wasser in sehr reiner Form gewonnen werden. Sie werden nach üblichen Methoden hergestellt, in dem man z. B. ein Amin der Formel

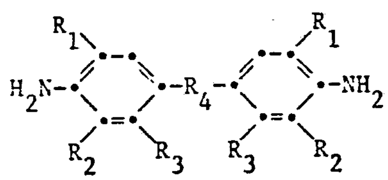

(11)

worin $R_1$, $R_2$, $R_3$ und $R_4$ die oben angegebenen Bedeutungen haben, in üblicher Weise gegebenenfalls in Gegenwart eines organischen Lösungsmittels, tetrazotiert und mit einer Kupplungskomponente der Formel

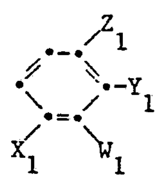

(12)

worin $X_1$, $Y_1$, $Z_1$ und $W_1$ die oben angegebenen Bedeutungen haben, gegebenenfalls in Gegenwart eines organischen Lösungsmittels und gegebenenfalls in Gegenwart einer Base, kuppelt.

Auf ähnliche Weise werden die Farbstoffe der Formel (100) erhalten, indem man z. B. das Amin der Formel

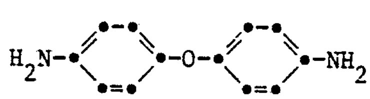

(11a)

in üblicher Weise gegebenenfalls in Gegenwart eines organischen Lösungsmittels tetrazotiert und mit einer Kupplungskomponente der Formel

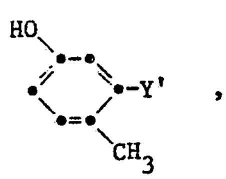

(12a)

worin Y' die oben angegebenen Bedeutungen hat, gegebenenfalls in Gegenwart eines organischen Lösungsmittels und gegebenenfalls in Gegenwart einer Base kuppelt.

Bei der Herstellung von Disazofarbstoffen der Formel (1), in denen die Substituenten $R_1$ und $R_2$ Cyano bedeuten, ist es zweckmässig, die Cyanogruppe aus der entsprechenden halogenierten Verbindung durch eine Austauschreaktion einzuführen.

Bedeutet $R_1$ und $R_2$ in Formel (1) Alkylsulfon, so ist es ebenfalls möglich, die entsprechenden Azoverbindungen aus der halogenierten Verbindung herzustellen, indem diese mit einem geeigneten Sulfinat, gegebenenfalls in Gegenwart von $Cu^+$, umgesetzt werden.

Als Amine der Formel (11) kommen beispielsweise die in Tabelle 1 aufgeführten Verbindungen in Frage.

Tabelle 1

(11) 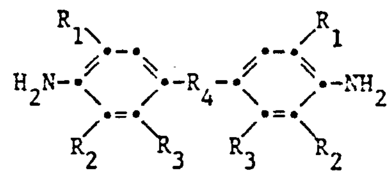

| $R_1$ | $R_2$ | $R_3$ | $R_4$ |
|---|---|---|---|
| H | H | H | $>O$ |
| H | H | H | $>SO_2$ |
| H | H | H | $>C=O$ |
| H | H | H | $-CH_2-$ |
| H | H | H | $-CH_2-CH_2-$ |
| H | H | H | $-CH_2CH_2CH_2-$ |
| H | H | H | $-CH_2CH_2CH_2CH_2-$ |
| H | H | H | $-CH=CH-$ |
| Br | Br | H | $>SO_2$ |
| Br | Br | H | $>CO$ |
| Br | Br | H | $>CH_2$ |

(Siehe Tabelle 1 Fortsetzung, Seite 10 f.)

Tabelle 1 (Fortsetzung)

| $R_1$ | $R_2$ | $R_3$ | $R_4$ |
|---|---|---|---|
| Br | Br | H | $-(CH_2)_2-$ |
| Br | Br | $CH_3$ | $-(CH_2)_2-$ |
| Br | Br | H | $-(CH_2)_3-$ |
| Br | Br | H | $-(CH_2)_4-$ |
| Br | $NO_2$ | H | $>SO_2$ |
| Br | $NO_2$ | H | $>CO$ |
| $NO_2$ | $NO_2$ | H | $>SO_2$ |
| $NO_2$ | $NO_2$ | H | $>C=O$ |
| CN | CN | H | $>SO_2$ |
| CN | CN | H | $>C=O$ |
| Br | Br | H | - |
| Br | $NO_2$ | H | - |
| Br | $NO_2$ | H | $-CH_2-$ |
| Br | $NO_2$ | H | $-(CH_2)_2-$ |
| CN | $NO_2$ | H | $>SO_2$ |
| CN | $NO_2$ | H | $>C=O$ |
| $NO_2$ | $NO_2$ | H | - |
| CN | CN | H | - |
| CN | CN | H | $-CH_2-$ |
| CN | CN | H | $-(CH_2)_2-$ |
| CN | $NO_2$ | H | $-CH_2-$ |
| CN | $NO_2$ | H | $-(CH_2)_2-$ |
| $SO_2CH_3$ | $NO_2$ | H | $>SO_2$ |
| $SO_2CH_3$ | $NO_2$ | H | $>C=O$ |

Weitere geeignete Diamine, die tetrazotiert werden können, entsprechen den Formeln :

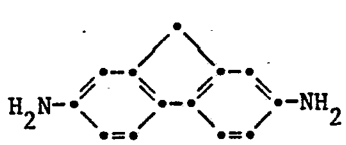

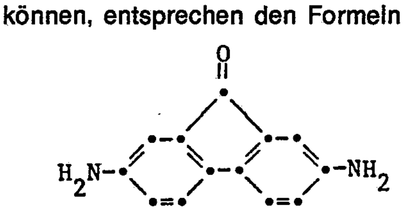

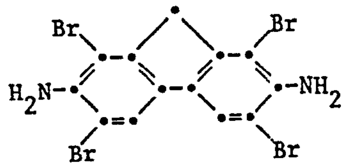

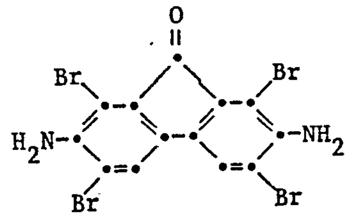

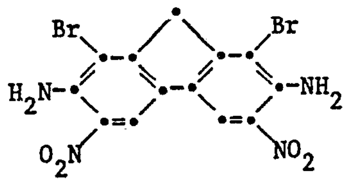

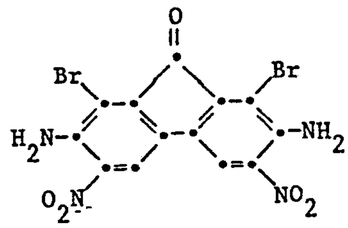

Beispiele geeigneter Kupplungskomponenten sind in Tabelle 2 zusammengestellt.

Tabelle 2

(12) 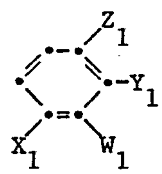

| $X_1$ | $Y_1$ | $Z_1$ | $W_1$ |
|---|---|---|---|
| $OCH_3$ | $N(C_4H_9)_2$ | H | H |
| OH | $N(C_4H_9)_2$ | H | H |
| $NHCOCH_3$ | $N(C_4H_9)_2$ | H | H |
| $NHCOC_2H_5$ | $N(C_3H_7)_2$ | H | H |
| $NHCOC_4H_9$ | $N(C_3H_7)_2$ | H | H |
| $NHCOCH_2CH(CH_3)_2$ | $N(C_2H_5)_2$ | H | H |
| $NHCOCH_2CH(CH_3)_2$ | 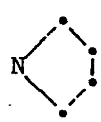 | $OCH_3$ | H |
| $NHCOCH_3$ | $N(C_2H_5)_2$ | $OCH_3$ | H |
| $NHCOCH_2CH(CH_3)_2$ | $N(C_2H_5)_2$ | $OCH_3$ | H |
| $NHCOCH_2CH(CH_3)_2$ | $N(C_4H_9)_2$ | $OCH_3$ | H |
| $NHCOCH_2CH(CH_3)_2$ | $N(C_6H_{13})_2$ | H | H |
| $NHCOCH_2CH(CH_3)_2$ | $N(C_6H_{13})_2$ | $OCH_3$ | H |
| $NHCOCH_2CH(CH_3)_2$ | $N(C_4H_9)_2$ | $OCH_3$ | H |

Tabelle 2 (Fortsetzung)

| $X_1$ | $Y_1$ | $Z_1$ | $W_1$ |
|---|---|---|---|
| $NHCOCH_2CH(CH_3)_2$ | $NHCH(CH_3)CH_2OCH_3$ | $OCH_3$ | H |
| $NHCO\ \ CH(CH_3)_2$ | $NHCH(CH_3)CH_2OCH_3$ | $OCH_3$ | H |
| $NHCOCH_3$ | $N(C_2H_5)C_2H_4CN$ | $OCH_3$ | H |
| $NHCOC_2H_5$ | $N(C_2H_5)_2$ | $OC_2H_4OCH_3$ | H |
| $NHCOC_3H_7$ | $N(C_2H_5)_2$ | $OCH_3$ | H |
| $NHCOCH_3$ | $N(C_4H_9)_2$ | $OC_2H_4OCH_3$ | H |
| $NHCOCH(C_2H_5)C_4H_9$ | $N(C_2H_5)_2$ | $OCH_3$ | H |
| $NHCOCH(C_{12}H_{25})OC_6H_4\text{-}C_5H_{11}$ | $N(C_2H_5)_2$ | $OCH_3$ | H |
| $NHCO_2C_2H_4OCH_2CH(CH_3)_2$ | $N(C_2H_5)_2$ | $OCH_3$ | H |
| $NHCO_2C_2H_4OCH_2CH(CH_3)_2$ | $NHCH(CH_3)CH_2OCH_3$ | $OCH_3$ | H |
| $OCH_3$ | $N(C_4H_9)_2$ | $OCH_3$ | H |
| $NHCOCH_2CH(CH_3)_2$ | $N(C_2H_5)_2$ | $OC_2H_4OCH_3$ | H |
| $NHCOCH_2CH(CH_3)_2$ | $N(C_2H_5)_2$ | $OC_2H_5$ | H |
| $NHCOC_3H_7$ | $N(C_2H_5)_2$ | $OC_4H_9$ | H |
| $NHCOCH_2CH(CH_3)_2$ | $NHC_2H_4CN$ | H | H |
| $NHCOC_{11}H_{23}$ | $NHC_2H_4CN$ | H | H |
| $NHP(O)(OC_4H_9)_2$ | $NHC_2H_4CN$ | H | H |
| $NHP(O)(OC_2H_5)_2$ | $NHCH(CH_3)CH_2OCH_3$ | $OCH_3$ | H |
| $NHP(O)(OCH_3)_2$ | $N(C_4H_9)_2$ | $OCH_3$ | H |
| $NHP(O)(OC_2H_5)_2$ | $N(C_2H_5)_2$ | H | H |
| $NHP(O)(OC_4H_9)_2$ | $N(C_2H_5)_2$ | $OCH_3$ | H |
| $NHP(O)(OC_2H_5)_2$ | $N(C_2H_5)_2$ | $OCH_3$ | H |

Tabelle 2 (Fortsetzung)

| $X_1$ | $Y_1$ | $Z_1$ | $W_1$ |
|---|---|---|---|
| $NHP(O)(OC_2H_4OC_2H_5)_2$ | $N(C_2H_5)_2$ | $OCH_3$ | H |
| $NHP(O)(OC_4H_9)_2$ | $NHCH(CH_3)CH_2OCH_3$ | $OCH_3$ | H |
| $NHP(O)(OC_4H_9)_2$ | $NHCH(CH_3)CH_2OCH_3$ | $OC_2H_4OCH_3$ | H |
| $NHP(O)[OCH_2CH(CH_3)_2]_2$ | $NHCH(CH_3)CH_2CH(CH_3)_2$ | $OCH_3$ | H |
| $NHP(O)(OC_2H_5)_2$ | $NHCH(CH_3)CH_2OCH_3$ | $OC_2H_4OCH_3$ | H |
| $NHCOCH_2CH(CH_3)_2$ | $N(C_2H_5)_2$ | $O(C_2H_4O)_2CH_3$ | H |
| OH | H | $C_5H_{11}$ | H |
| OH | H | $C_5H_{11}$ | $C_5H_{11}$ |
| OH | H | $CO_2CH_2CH(CH_3)_2$ | H |
| OH | H | $CO_2(C_2H_4O)CH_3$ | H |
| OH | H | $CH_2CO_2CH_2CH(CH_3)_2$ | H |
| OH | H | $OCH_2CH(CH_3)_2$ | H |
| OH | H | $O(C_2H_4O)_2CH_3$ | H |
| OH | H | $CH_2CO_2(C_2H_4O)_2CH_3$ | H |
| OH | H | $NHCOCH(C_2H_5)C_4H_9$ | H |
| OH | H | $NCH_3COCH(C_2H_5)C_4H_9$ | H |
| OH | H | $O(C_2H_4O)_2CH_3$ | H |
| OH | OH | $CO_2CH_2CH(CH_3)_2$ | H |
| OH | H | OH | $OC_3H_7$ |
| OH | $NHCOCH_3$ | $OCH_3$ | H |
| OH | $NHC_2H_4CN$ | H | H |
| OH | $NHC_2H_5CN$ | $OCH_3$ | H |

Tabelle 2 (Fortsetzung)

| $X_1$ | $Y_1$ | $Z_1$ | $W_1$ |
|---|---|---|---|
| OH | $NHCOCH_2CH(CH_3)_2$ | $OCH_3$ | H |
| OH | $NHCO_2(C_2H_4O)_2CH_3$ | $OCH_3$ | H |
| OH | $N(C_2H_4CN)COCH_3$ | $OCH_3$ | H |
| OH | $OCH_3$ | $OCH_3$ | H |
| OH | $OC_2H_5$ | $OC_2H_5$ | H |
| OH | $NHC_3H_7$ | H | H |
| OH | $NHC_3H_7$ | $OCH_3$ | H |
| OH | $N(C_3H_7)_2$ | $OCH_3$ | H |
| OH | $N(C_4H_9)COCH_3$ | $OCH_3$ | H |
| OH | $NHCOCH(C_2H_5)C_4H_9$ | $OCH_3$ | H |
| OH | $NHCOCH(C_2H_5)C_4H_9$ | $CH_3$ | H |
| OH | $OC_2H_4OC_4H_9$ | $CH_3$ | H |
| OH | $O(C_2H_4O)_2CH_3$ | $CH_3$ | H |
| OH | $O(C_2H_4O)_2CH_3$ | H | H |
| OH | $OCH_3$ | $NHCOCH_2CH(CH_3)_2$ | H |
| OH | $OCH_2CH_2CH(CH_3)_2$ | $CH_3$ | H |
| $NHCOC_2H_4OC_2H_5$ | $N(C_2H_5)_2$ | $OCH_3$ | H |
| $NHCOC_2H_4OC_4H_9$ | $N(C_2H_5)_2$ | $OCH_3$ | H |
| $NHCOC_2H_4OC_2H_5$ | $N(C_2H_5)_2$ | $OC_2H_4OCH_3$ | H |
| $NHCOC_2H_4OC_4H_9$ | $N(C_2H_5)_2$ | $OC_2H_4OCH_3$ | H |

Die öllöslichen Disazofarbstoffe der Formeln (1) und (100) können für verschiedene Zwecke, insbesondere aber in photographischen Materialien und hierbei besonders vorteilhaft als Bildfarbstoffe für das Silverfarbbleichverfahren, verwendet werden. Demgemäss lassen sich in üblicher, an sich bekannter Weise, wertvolle photographische Materialien, insbesondere Silberfarbbleichmaterialien, herstellen, die auf einem Schichtträger in mindestens einer Silberhalogenidemulsionsschicht oder in einer an die Silberhalogenidemulsionsschicht grenzenden Kolloidschicht mindestens einen in Oel gelösten Farbstoff der Formel (1) oder (100) enthalten.

Die in Oel gelösten Verbindungen der Formeln (1) bis (10) und (100) zeigen mehrere Vorteile.

So zeichnen sie sich durch hohe Stabilität ihrer Emulsionen aus. Die Tendenz zur Micellbildung fehlt vollständig, wodurch die Farbdichte der photographischen Bilder nicht negativ beeinflusst wird.

Das Oel wirkt nicht nur als Lösungsmittel für Farbstoffe, sondern kann gleichzeitig Weichmacher für die Gelatine sein. Die mögliche Ablösung der photographischen Schichten vom Trägermaterial, die besonders unter feuchten Bedingungen eintreten kann, wird so weitgehend verhindert.

Bedingt durch die gute Löslichkeit der Farbstoffe in Oel, lässt sich eine grosse Aufnahmefähigkeit von Farbstoff in einem Oeltröpfchen erreichen. Dadurch können photographische Materialien mit sehr dünnen Schichten gegossen werden. Dies wirkt sich vorteilhaft auf die Bildschärfe aus.

Als Träger für die Silberhalogenidemulsionsschichten kann ein transparentes, metallisch-reflektierendes oder vorzugsweise weissopakes Material verwendet werden, das vorzugsweise keine Flüssigkeit aus den Bädern aufzusaugen vermag.

Der Träger kann beispielsweise aus gegebenenfalls pigmentierten Cellulosetriacetat oder Polyester bestehen. Wenn er aus Papierfilz besteht, muss dieser beidseitig lackiert oder mit Polyäthylen beschichtet sein. Auf mindestens einer Seite dieses Trägers befinden sich die lichtempfindlichen Schichten, vorzugweise in der bekannten Anordnung, d. h. zu unterst eine rot sensibilisierte Silberhalogenidemulsionsschicht, die einen blaugrünen Azofarbstoff enthält, darüber eine grün sensibilisierte Silberhalogenidemulsionsschicht, die einen purpurfarbenen Azofarbstoff enthält und zu oberst eine blauempfindliche Silberhalogenidemulsionsschicht, die einen gelben Azofarbstoff enthält. Das Material kann auch Unterschichten, Zwischenschichten, Filterschichten und Schutzschichten enthalten, doch soll die gesamte Dicke der Schichten in der Regel 20 µm nicht übersteigen.

Die erfindungsgemässen Farbstoffe sind lipophil und werden im allgemeinen als Lösungen in hochsiedenden Lösungsmitteln in die Gelatine eingearbeitet. In den meisten Fällen genügt es die zu verwendenden Farbstoffe als Lösung in einem solchen Lösungsmittel, eventuell unter Zuhilfenahme eines leicht flüchtigen Hilfslösungsmittels bei normaler oder leicht erhöhter Temperatur zu einer wässerigen Gelatinelösung unter gutem Rühren zuzusetzen. Anschliessend wird die Mischung mit einer Silberhalogenid und/oder andere Materialien zur Erzeugung photographischer Bilder enthaltender Gelatine zusammengebracht, auf einer Unterlage in üblicher Weise zu einer Schicht gegossen und gegebenenfalls getrocknet.

Disazofarbstoffe der Formeln (1) und (100), in organischen Lösungsmitteln gelöst, können direkt zu einer Silberhalogenid und/oder andere Materialien zur Erzeugung photographischer Bilder enthaltenden Gelatine zugegeben werden. So ist es z. B. möglich, die Farbstofflösung erst unmittelbar vor dem Giessen zuzudosieren.

Anstelle des einfachen Rührens können auch die üblicher Verteilungsmethoden mittels Knet- und/oder Scherkräften oder Ultraschall zur Anwendung gelangen.

Es ist auch möglich, den Farbstoff nicht als Lösung sondern in fester Form als feine Suspension zuzugeben. Es ist desweiteren möglich, die Farbstoffe in Gegenwart von hochmolekularen Polymeren in die Gelatine einzuarbeiten. Von besonderem Interesse sind für diese Anwendung Latices.

Die Giesslösung kann noch weitere Zusätze wie Härtungsmittel, Komplexierungsmittel und Netzmittel sowie Sensibilisatoren und Stabilisatoren für das Silberhalogenid enthalten.

Die Disazofarbstoffe gehen keine chemischen Reaktionen mit den lichtempfindlichen Materialien ein. Die Farbstoffe der Formeln (1) und (100) sind sehr diffusionsfest, weil sie stabile, organische Lösungen bilden. Sie sind gegen Calciumionen unempfindlich und auf Weiss gut bleichbar.

Die Disazofarbstoffe erzeugen bei der Zugabe zu den Giesslösungen weder einen Viskositätsanstieg noch eine wesentliche Viskositätsänderung beim Stehenlassen des Giessgemisches.

Die spektralen Absorptionen in Gelatine liegen so, dass die Farbstoffe der Formeln (1) und (100), je nach Struktur zu einem Farbstofftripel, zusammengestellt aus je einem Gelb-, Purpur- oder Blaugrünfarbstoff, kombiniert werden können, das über dem ganzen Dichtebereich für das Auge neutral erscheinende Grautöne aufweist.

Das mit Disazofarbstoffen der Formeln (1) und (100) hergestellte photographische Silberfarbbleichmaterial zeichnet sich insbesondere durch brillante Farben, gute Farbweidergabe und ausgezeichnete Lichtechtheit aus. Ein wichtiges Merkmal eines guten Farbkopiermaterials ist eine optimale Tonreproduktion und in allen Dichtebereichen ausgeglichene Farbgradationen. Besonders die Kontrolle des Farbgleichgewichtes bereitet immer wieder Schwierigkeiten, da unterschiedliches Bleichverhalten der Azofarbstoffe nicht immer mit den herkömmlichen Methoden des Materialaufbaues, wie Abstimmung von Empfindlichkeit und Kontrast der eingesetzten Silberhalogenidemulsion ausgeglichen werden kann. Dadurch wird vielfach die Auswahl der Bildfarbstoffe, wie insbesondere auch diejenigen der Verarbeitungskomponenten im Bleichbad eingeschränkt.

Die Verarbeitung der belichteten Silberfarbbleichmaterialien erfolgt im allgemeinen in vier aufeinanderfolgenden Schritten.

1. Silberentwicklung
2. Farbbleichung
3. Silberbleichung
4. Fixierung.

Im ersten Schritt wird das bei der Belichtung entstehende latente Silberbild entwickelt. Im zweiten Schritt wird, entsprechend der vorliegenden bildmässigen Verteilung des Silbers, der dem Silber zugeordnete Bildfarbstoff ausgebleicht. Der dritte Schritt ist notwendig, um das nach der Farbbleichung noch vorhandene überschüssige Bildsilber zu reoxidieren. Im vierten Schritt wird das nunmehr gänzlich in Form von Halogeniden vorliegende Silber durch Herauslösen mit einem Komplexbildner, insbesondere

einem Salz der Thioschwefelsäure, entfernt, um das fertige Bild gegenüber weiterer Belichtung unempfindlich zu machen, und das reine Farbbild von Trübung zu befreien.

Der zweite Verfahrensschritt, die Farbbleichung, erfolgt bei den üblichen bekannten Verfahren in stark saurem Medium, wobei zur Beschleunigung der Farbbleichung ein Katalysator zugesetzt wird. Die Bleichbäder enthalten zudem einen Silberkomplexbildner oder Liganden. Beide Bestandteile, Katalysator und Ligand, sind notwendig, um die reduzierende Wirkung des metallischen, nichtdiffundierbaren Bildsilbers auf den ebenfalls nicht diffundierbaren Farbstoff zu übertragen. Die durch Reduktion am Bildsilber entstehende reduzierte Form des Katalysators dient dabei als Zwischenträger, welcher, nach Zurücklegung einer gewissen Diffusionsstrecke, den Farbstoff irreversibel reduziert und damit bleicht, und dabei selbst zur ursprünglichen Form reoxidiert wird.

Die Eigenschaft der reduzierten Stufe des Bleichkatalysators, zwischen Bildsilber und zu bleichendem Farbstoff frei zu diffundieren, ermöglicht est, Silber und Bildfarbstoff in einem gewissen Mass räumlich zu trenne, d. h. also den bleichbaren Farbstoff und die ihme zugeordnete Silberhalogenidemulsion nicht oder nur teilweise in der gleichen Schicht sondern in benachbarten Schichten anzuordnen. Solche Silberfarbbleichmaterialien sind z. B. in den Deutschen Offenlegungsschriften 2 036 918, 2 132 835 und 2 132 836 beschrieben.

Eine Vereinfachung des Verarbeitungsprozesses, bei der die Farbstoffbleichung und die Silberbleichung zu einem einzigen Verfahrensschritt zusammengefasst werden, ist in der DE-OS 2 448 433 beschrieben worden.

Die kombinierten Farb- und Silberbleichbäder (Zubereitungen) für die Verarbeitung des belichteten Silberfarbbleichmaterials enthalten die Komponenten (a) bis (e) und gegebenenfalls (f) :

(a) starke Säure
(b) wasserlösliches Jodid
(c) wasserlöslmiches Oxidationsmittel
(d) Oxidationsschutzmittel
(e) Bleichkatalysator
(f) Bleichbeschleuniger.

Die Menge der Bleichkatalysatoren, die in den vorzugsweise wässrigen Behandlungsbädern eingesetzt wird, kann in weiten Grenzen schwanken und beträgt etwa 0,05 bis 10 g/l Bleichbad.

Die Temperatur des Bleichbades liegt im allgemeinen zwischen 20 und 90 °C, vorzugsweise zwischen 20 und 60 °C, wobei natürlich bei höherer Temperatur die erforderliche Bearbeitungsdauer kürzer ist als bei tieferer Temperatur. Die Bleichbäder sind innerhalb des angegebenen Temperaturbereicht stabil. Im allgemeinen werden die für die Verarbeitung benötigten wässrigen Bleichzubereitungen in der Form verdünnter wässriger Lösungen, die die genannten Komponenten enthalten, verwendet. Es sind aber auch andere Methoden denkbar, z. B. die Anwendung in Pastenform.

Dieser Temperaturbereich gilt auch für die anderen Verarbeitungsschritte. Die wässrige Bleichzubereitung gemäss der vorliegenden Erfindung kann z. B. aus flüssigen, insbesondere wässrigen Konzentraten einzelner oder aller Komponenten ((a) bis (f)) hergestellt werden. Vorteilhaft verwendet man z. B. zwei flüssige Konzentrate, deren eines die starke Säure (a) und das Oxydationsmittel (c) und deren anderes die übrigen Komponenten (b), (d), (e) und gegebenenfalls (f) enthält, wobei dem letzteren Konzentrat zur Verbesserung der Löslichkeit, insbesondere der Komponente (e) ein zusätzliches Lösungsmittel wie Aetyl- oder Propylalkohol, Benzylalkohol, Aethylenglykomethyl- oder -äthyläther zugesetzt werden kann. Diese Konzentrate (Teilkonzentrate), die ebenfalls Gegenstand der vorliegenden Erfindung sind, weisen eine ausgezeichnete Stabilität auf und sind daher längere Zeit lagerfähig. Diese Konzentrate können gegebenenfalls durch Verdünnen mit Wasser oder mit einem Gemisch aus Wasser und einem organischen Lösungsmittel verdünnt und im erfindungsgemässen Verfahren eingesetzt werden. Die zur Anwendung gelangenden wässrigen Bleichzubereitungen enthalten in der Regel die Komponenten (a) bis (f) in den folgenden Mengen :

(a) starke Säure : 10 bis 200 g/l ;
(b) wasserlösliches Jodid : 2 bis 50 g/l, vorzugsweise 5 bis 25 g/l ;
(c) wasserlösliches Oxydationsmittel : 1 bis 30 g/l ;
(d) Oxydationsschutzmittel : 0,5 bis 10 g/l ;
(e) Bleichkatalysatoren : 0,05 bis 10 g/l, und gegebenenfalls
(f) Bleichbeschleuniger : 1 bis 5 g/l.

Die Konzentrate der einzelnen oder aller Komponenten oder ihre Kombinationen, z. B. aus der Komponente (a) und (c) sowie aus den Komponenten (b), (d), (e) und (f) können die 2- bis 20-fache, vorzugsweise 5- bis 10-fache Menge der einzelnen Komponenten pro Liter konzentrierter Zubereitung enthalten, wie sie zuvor für die gebrauchsfertigen Bleichbäder angegeben wurde. Sie liegen in der Regel als flüssige oder pastenförmige Konzentrate vor.

Als starke Säuren (Komponente (a)), können die kombinierten Farb- und Silberbleichbäder Alkyl- oder Arylsulfonsäuren und insbesondere p-Toluolsulfonsäure, Schwefelsäure, Sulfaminsäure oder

Trichloressigsäure enthalten. Gegebenenfalls können auch Gemische dieser Säuren eingesetzt werden. Der pH-Wert des Bleichbades ist insbesondere nicht grösser als 2 und vorzugweise nicht grösser als 1.

Die wasserlöslichen Jodide (Komponente (b)) sind in der Regel Alkalimetalliodide, insbesondere Natrium- und Kaliumjodid.

Als Oxydationsmittel (c) verwendet man zweckmässig wasserlösliche aromatische Mononitro- und Dinitroverbindungen, sowie Anthrachinonsulfonsäurederivate. Die Verwendung solcher Oxydationsmittel dient zur Beeinflussung des Farbgleichgewichts und des Kontrasts der im Farbbleichverfahren hergestellten Bilder und ist aus der deutschen Patentschrift 735 672, den britischen Patentschriften 539 190 und 539 509 und der japanischen Patentpublikation 22673/69 bekannt.

Die Mononitro- und Dinitroverbindungen sind vorzugsweise Mono- oder Dinitrobenzolsulfonsäuren, z. B. solche der Formel

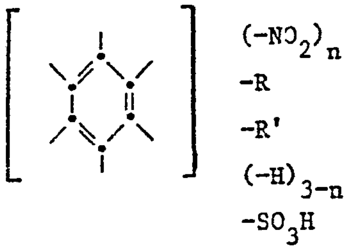

(24)

worin n gleich 1 oder 2 ist und R sowie R′ Wasserstoff, Niederalkyl mit 1 bis 4 Kohlenstoffatomen, Alkoxy, Amino, Hydroxyl oder Halogen (Chlor, Brom) bedeuten. Die Sulfonsäuren können als leichtlösliche Salze zugefügt werden. Geeignete sind z. B. die Natrium- oder Kaliumsalze der folgenden Säuren :

o-Nitrobenzolsulfonsäure,
m-Nitrobenzolsulfonsäure,
2,4-Dinitrobenzolsulfonsäure,
3,5-Dinitrobenzolsulfonsäure,
3-Nitro-4-chlorbenzolsulfonsäure,
2-Chlor-5-nitrobenzolsulfonsäure,
4-Methyl-3,5-dinitrobenzolsulfonsäure,
3-Chlor-2,5-dinitrobenzolsulfonsäure,
2-Amino-4-nitrobenzolsulfonsäure,
2-Amino-4-nitro-5-methoxybenzolsulfonsäure,
4-Nitro-2-hydroxybenzolsulfonsäure.

Die Verbindungen der Komponente (c) dienen neben ihrer Funktion als Silber-Bleichmittel zur Gradationsverflachung.

Als Oxydationsschutzmittel (Korrosionsschutzmittel (d) werden mit Vorteil Reduktone oder wasserlösliche Mercaptoverbindungen verwendet. Geeignete Reduktone sind insbesondere aci-Reduktone mit einer 3-Carbonyldiol-(1,2)-Gruppierung, wie Redukton, Triose-Redukton oder vorzugsweise Ascorbinsäure. Als Mercaptoverbindungen kommen z. B. Thioglyzerin, insbesondere jedoch die Verbindungen der Formel

$$HS—C_qH_{2q}—B \qquad (25)$$

oder vorzugsweise

$$HS—(CH_2)_m—COOH \qquad (26)$$

in Betracht, worin q eine ganze Zahl im Wert von 2 bis 12, B eine Sulfonsäure- oder Carbonsäuregruppe und m eine der Zahlen 3 und 4 bedeuten. Als Oxydationsschutzmittel verwendbare Mercaptoverbindungen sind in der DE-OS 2 258 076 und der DE-OS 2 423 814 beschrieben. Als weitere Oxydationsschutzmittel geeignet sind Alkalimetall-, Erdalkalimetall- oder Ammoniumbisulfitaddukte von organischen Carbonylverbindungen, vorzugweise Alkalimetall- oder Ammoniumbisulfitaddukte von Monoaldehyden mit 1 bis 4 oder Dialdehyden mit 2 bis 5 Kohlenstoffatomen (DE-OS 2 737 142).

Beispielsweise genannt seien das besonders bevorzugte Formaldehydbisulfitaddukt, ferner die entsprechenden Addukte von Acetaldehyd; Propionaldehyd, Butyraldehyd oder Isobutyraldehyd, von Glyoxal, Malondialdehyd oder Glutardialdehyd. Gegebenenfalls sind auch die nachfolgenden, als Bleichbeschleuniger bezeichneten tertiären wasserlöslichen Phosphine gleichzeitig als oxydationsschutzmittel einsetzbar.

Geeignete Bleichbeschleuniger (f) sind z. B. quaternäre Ammoniumsalze wie sie aus den deutschen Offenlegungsschriften 2 139 401 und 2 716 136 bekannt sind. Bevorzugt handelt es sich dabei um

quaternäre, gegebenenfalls substituierte Piperidin-, Piperazin-, Pyzazin-, Chinolin- oder Pyridinverbindungen, wobei letztere bevorzugt sind. Ferner könnenauch Tetraalkylammoniumverbindungen (Alkyl mit 1 bis 4 Kohlenstoffatomen) und Alkylendiammoniumverbindungen (Alkylen mit 2 bis 6 Kohlenstoffatomen) in Frage kommen. Im einzelnen seien genannt :

Tetraäthylammoniumjodid ; $(CH_3)_3N^{\oplus}(CH_2)_2N^{\oplus}(CH_3)_3 \cdot 2\,J^{\ominus}$ ; $(CH_3)_3N^{\oplus}(CH_2)_6N^{\oplus}(CH_3)_3 \cdot 2\,J^{\ominus}$. N-Methylpyridiniumjodid ; N-Methylchinoliniumjodid ; N-Hydroxyäthylpyridiniumchlorid ; N-Hydroxypropylpyridiniumbromid ; N-Methyl-2-Hydroxymethylpyridiniumjodid ; N,N-Dimethylpiperidiniumjodid ; N,N'-Dimethylpyraziniumfluorsulfat und γ-Picoliniumhydrogensulfat.

Weitere Bleichbeschleuniger sind die aus der DE-OS 2 651 969 bekannten wasserlöslichen tertiären Phosphine, die vorzugsweise mindestens eine Cyanoäthylgruppierung enthalten.
Sie entsprechen z. B. der formel

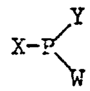

(27)

worin W—$C_rH_{2r}CN$, —$C_rH_{2r}NO_2$ oder ein gegebenenfalls substituierter Arylrest oder ein heterocyclischer Rest, r 1 bis 25, X gegebenenfalls substituiertes Alkyl und Y Hydroxylalkyl, Alkoxyalkyl, Sulfoalkyl, Aminoalkyl (Alkyl je 1 bis 25, vorzugweise 2 bis 4 Kohlenstoffatome), Phenyl, Sulfophenyl oder Pyridyl ist.
Bevorzugte tertiäre Phosphine entsprechen der Formel

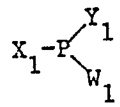

(28)

worin $X_1$ —$CH_2CH_2CN$ oder $(CH_2)_2OCH_3$, $Y_1$ —$(CH_2)_2SO_3^{\ominus}\,M^{\oplus}$, —$(CH_2)_3$—$SO_3^{\ominus}\,M^{\oplus}$, —$(CH_2)_4$—$SO_3^{\ominus}\,M^{\oplus}$, —$(CH_2)_2OCH_3$ oder —$CH_2N(C_2H_5)_2$, $W_1$ —$CH_2CH_2CN$ oder Phenyl und $M^+$ ein Kation, insbesondere ein Alkalimetallkation, z. B. das Natrium- oder Kaliumkation ist.
Im einzelnen seien die folgenden Verbindungen genannt :

Bis-(β-cyanoäthyl)-2-sulfoäthylphosphin (Natriumsalz),
Bis-(β-cyanoäthyl)-3-sulfopropylphosphin (Natriumsalz),
Bis-(β-cyanoäthyl)-4-sulfobutylphosphin (Natriumsalz),
Bis-(β-cyanoäthyl)-2-methoxyäthylphosphin,
Bis-(2-methocyäthyl)-(β-cyanoäthyl)-phosphin,
(β-cyanoäthyl)-phenyl-3-sulfopropylphosphin (Natriumsalz),
(β-Cyanoäthyl)-phenyl-2-methoxyäthylphosphin und
Bis-(2-methoxyäthyl)-phenylphosphin.

Die Wiederholung einzelner Behandlungen (jeweils in einem weiteren Tank mit einem Bad gleicher Zusammensetzung wie das vorangehende) ist möglich, wodurch in manchen Fällen eine bessere Badausnützung erreicht werden kann. Wenn es die Zahl der zu Verfügung stehenden Tanks und das Zeitprogramm zulassen, so kann man auch zwischen Bädern verschiedener Wirkung Wasserbäder einsetzen. Es bleibt dem Fachmann überlassen, das optimale Mengenverhältnis je nach Art der ausgewählten Katalysatoren aus den sensitometrischen Resultaten zu bestimmen. Alle Bäder können weitere übliche Zusätze wie z. B. Härtungsmittel, Netzmittel, optische Aufheller oder UV-Schutzmittel enthalten.

Zur Silberentwicklung können Bäder üblicher Zusammensetzung angewendet werden, z. B. solche, die als Entwicklersubstanz Hydrochinon und gegebenenfalls zusätzlich 1-Phenyl-3-pyrazolidinon enthalten. Gegebenenfalls enthält bereits das Silberentwicklungsbad einen Bleichkatalysator.

Das Silberfixierbad kann in bekannter und üblicher Weise zusammengesetzt sein. Als Fixiermittel dient z. B. Natriumthiosulfat oder mit Vorteil Ammoniumthiosulfat, gewünschtenfalls mit Zusätzen wie Natriumbisulfit und/oder Natriummetabisulfit.

## Beispiel 1

Herstellung des Farbstoffs der Formel

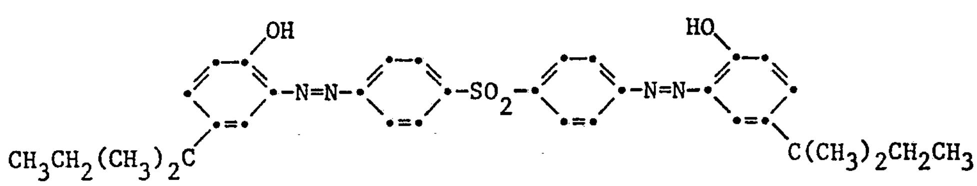

1,25 g (0,005 m) 4,4'-Diamino-diphenylsulfon werden in 75 ml Wasser in Gegenwart von 3,6 g konzentrierter Salzsäure gelöst. Bei 5 °C wird eine Lösung von 0,72 g (10,5 mmol) Natriumnitrit in 10 ml Wasser zugetropft. Die Lösung wird eine Stunde bei 5 °C gerührt. Die erhaltene Lösung des Diazoniumsalzes wird bei 5 °C zu einem Gemisch von 1,64 g (0,01 m) p-tert.Amylphenol und einer Lösung von 4,25 g Natriumcarbonat in 250 ml 65 %igem Aethanol gegeben. Man rührt 2 Stunden und saugt den Niederschlag ab. Nach der chromatographischen Reinigung auf Kieselgel mit Chloroform (99 Teile) und Essigsäureäthylester (1 Teil) erhält man 2 g (67 %) des gelben Farbstoffs vom Schmelzpunkt 165 bis 167 °C. $\lambda_{max}$ $CH_3Cl_3$ = 423 nm, $\lambda_{max}$gel = 419 nm.

## Beispiel 2

Herstellung des Farbstoffs der Formel

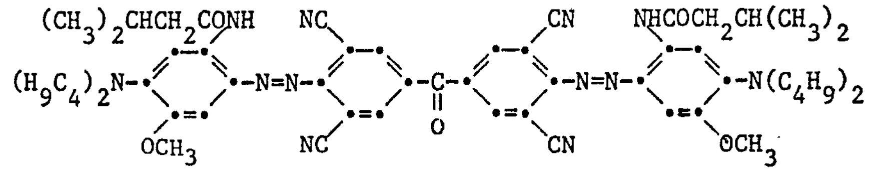

a) Diazokomponente

a$_1$) Bis-4,4'-Acetamido-diphenyl-methan

109,5 g (0,55m) 4,4-Diamino-diphenylmethan werden in 800 ml Toluol gelöst. Dazu gibt man 112,3 g (1,10 m) Essigsäureanhydrid. Die erhaltene Dispersion wird 4 Stunden unter Rückfluss gekocht. Man lässt danach abkühlen, saugt den Niederschlag ab und trocknet ihn bei 70 °C im Vakuum.

Die Ausbeute beträgt 146 g (90 %), der Schmelzpunkt 225 bis 226 °C.

a$_2$) Bis-4,4'-Acetamido-benzophenon

28,0 g (0,10 m) Bis-4,4'-acetamido-diphenylmethan werden in 250 ml Essigsäure suspendiert. 27,5 g (0,26 m) $CrO_3$ werden portionsweise bei 60 °C zu gegeben. Man rührt 2 Stunden bei dieser Temperatur und weitere 2 Stunden bei 90 °C: Die erhaltene Lösung wird in 3 l Eiswasser gegossen. Der sich bildende Niederschlag wird abgesaugt und mit Wasser gewaschen. Das Rohprodukt wird in 100 ml Aceton gelöst. Nach Abtrennen unlöslicher Anteile wird die Lösung in 500 ml Wasser eingerührt. Der gebildete Niederschlag wird abgesaugt und bei 70 °C im Vakuum getrocknet.

Die Ausbeute beträgt 20,0 g (67,5 %), der Schmelzpunkt 230 bis 232 °C.

a$_3$) 4,4'-Diamino-benzophenon

15,0 g (0,05 m) Bis-4,4'-acetamido-benzophenon werden in 75 g konzentrierter Salzsäure und 75 g Wasser 3 Stunden unter Rückfluss gekocht. Das Gemisch wird mit 500 ml Wasser verdünnt und mit 30 %iger Natronlauge neutralisiert. Der gebildete Niederschlage wird abgesaugt, mit Wasser gewaschen und bei 60 °C im Vakuum getrocknet.

Die Ausbeute beträgt 10,0 g (93 %), der Schmelzpunkt 238 bis 240 °C.

a$_4$) 4,4'-Diamino-2,2',6,6'-tetrabrom-benzophenon

2,12 g (0,01 m) 4,4'-Diamino-benzophenon werden in 100 ml 2-Methoxyäthanol in Gegenwart von 3 g konzentrierter Salzsäure suspendiert. Eine Lösung von 12 g (0,075 m) Brom, 2 g Natriumbromid und 20 ml Methanol wird zugetropft. Das Reaktionsgemisch wird 2 Stunden gerührt und dann in 300 ml Wasser gegossen. Durch Zugabe von Natriumsulfit wird der Bromüberschuss zerstört. Der gebildete niederschlag wird abgesaugt, mit Wasser und dann mit Methanol gewaschen und bei 60 °C im Vakuum getrocknet.

Die Ausbeute beträgt 4,8 g (90 %), der Schmelzpunkt 241 bis 243 °C (Zersetzung).

b) Kupplungskomponente

Herstellung von 2-Methoxy-5-isovalerylamido-N,N-dibutyl-anilin.

Unter Stickstoff werden 13,35 g (0,06 m) 2-Amino-4-isovalerylamidoanisol in 200 ml N,N-Dimethylacetamid gelöst. 10 g (0,25 m) Magnesiumoxid und 27,4 g (0,2 m) Butylbromid werden zugefügt. Das Gemisch wird sechs Stunden bei 130 °C erhitzt und schliesslich abgekühlt. Die Suspension wird abgesaugt und das Filtrat wird in 100 ml Eiswasser gegossen. Der Niederschlag wird abgesaugt und das

Rohprodukt wird in Gegenwart von Tierkohle in 40 ml Acetonitril umkristallisiert. Man erhält 16,0 g (80 %) 2-Methoxy-5-isovalerylamido-N,N-dibutylanilin vom Schmelzpunkt 88 bis 90 °C.

Das Kernresonanzspektrum (in $CDCl_3$) und die Elementaranalyse bestätigen die chemische Strucktur der Kupplungskomponente.

c) Herstellung des Azofarbstoffs der Formel

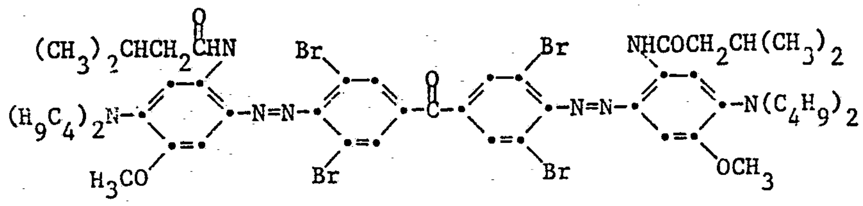

0,37 g (0,7 mmol) 4,4'-Diamino-2,2',6,6'-tetrabrom-benzophenon in 25 ml Essigsäure werden mit 0,30 g Methansulfonsäure und anschliessend mit 0,22 g Nitrosylschwefelsäure versetzt. Nach 90 Minuten Rühren bei Raumtemperatur wird die Diazoniumsuspension in ein Gemisch von 0,5 g 2-Methoxy-5-Isovalerylamido-N,N-dibutyl-anilin, 30 ml N,N-Dimethylformamid, 30 ml Essigsäure und 1,0 g Natriumacetat eingetragen. Das Reaktionsgemisch wird zwei Stunden bei 15 °C gerührt und in 150 ml Eiswasser gegossen. Der Niederschlag wird abgesaugt, in Chloroform gelöst und über Magnesiumsulfat getrocknet. Nach Abdampfen des Lösungsmittels wird der ölige Rückstand auf Kieselgel mit einem Gemisch aus Chloroform (97 Teile) und Hexan (1 Teil) eluiert. Die Ausbeute an Magentafarbstoff beträgt 0,37 g (43 %). $\lambda_{max}$ $CHCl_3$ = 532 nm ($\varepsilon$ = 44 700).

d) Herstellung des Azofarbstoffs der Formel

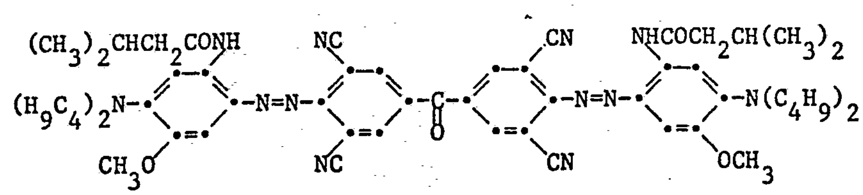

0,45 g (0,37 mmol) des unter c) hergestellten Farbstoffs werden in 30 ml N-Methyl-pyrrolidon mit 0,1 g Kupfer-(I)-cyanid und 0,7 g Zinkcyanid versetzt. Man rührt 20 Stunden bei 120° und trägt in 50 ml 10 %ige natriumchloridlösung ein. Der Niederschlag wird abgesaugt, mit Wasser gewaschen und getrocknet. Der Rückstand wird auf Kieselgel mit einem Gemisch aus Hexan (8 Teile) und Pyridin (2 Teile) eluiert. Die Ausbeute an Cyanfarbstoff beträgt 0,15 g (40 %). $\lambda_{max}CHCl_3$ = 677 nm ($\varepsilon$ = 154'000), $\lambda_{max}$Gel = 634 nm.

Auf ähnliche Weise werden die in Tabelle 3 aufgeführten Farbstoffe hergestellt.

(Siehe Tabelle 3 Seite 21 ff.)

Tabelle 3

| | $X_1$ | $Y_1$ | $Z_1$ | $R_1$ | $R_2$ | $W_1$ | $R_3$ | $R_4$ | $\lambda_{max}^{CHCl_3}$ | $\varepsilon_{mol}$ | $\lambda_{max}^{Gel}$ |
|---|---|---|---|---|---|---|---|---|---|---|---|
| 101 | $NHCOCH_2CH(CH_3)_2$ | $N(C_4H_9)_2$ | $OCH_3$ | H | H | H | H | -CH=CH- | 551 | 83200 | 552 |
| 102 | " | " | $OCH_3$ | Br | Br | H | H | $-SO_2-$ | 528 | 49800 | 545 |
| 103 | " | " | $OCH_3$ | CN | CN | H | H | $-SO_2-$ | 675 | 146000 | 615 |
| 104 | " | " | $OCH_3$ | CN | CN | H | H | -CO- | 677 | 154000 | 634 |
| 105 | " | $N(CH_3)_2$ | H | H | H | H | H | $-SO_2-$ | 499 | 76800 | 478 |
| 106 | $NHPO(OC_2H_5)_2$ | $NHCHCH_2CH(CH_3)_2$<br>$CH_3$ | $OCH_3$ | CN | CN | H | $CH_3$ | $-CH_2CH_2-$ | 575 | 93800 | 588 |
| 107 | $NHPO(OC_4H_9)_2$ | $NHC_2H_4CN$ | H | Br | Br | H | $CH_3$ | $-CH_2CH_2-$ | 394 | 46700 | 400 |
| 108 | $NHPO(OC_4H_9)_2$ | $NHCHCH_2OCH_3$<br>$CH_3$ | $OCH_3$ | CN | CN | H | $CH_3$ | $-CH_2CH_2-$ | 573 | 87700 | 594 |
| 109 | " | $N(C_2H_5)_2$ | $OCH_3$ | CN | CN | H | H | $-SO_2-$ | 639 | 120000 | 630 |
| 110 | " | $N(C_2H_5)_2$ | $OCH_3$ | CN | CN | H | H | -CO- | 626 | 96300 | 625 |
| 111 | " | $N(C_2H_5)_2$ | $OCH_3$ | CN | CN | H | H | - | 662 | 95000 | 640 |
| 112 | $NHCOCH_2(CH_3)_2$ | $N(C_4H_9)_2$ | $OCH_3$ | CN | $NO_2$ | H | H | $-SO_2-$ | 638 | 136000 | 630 |
| 113 | " | $N(C_4H_9)_2$ | $OCH_3$ | Br | Br | H | H | - | 526 | 58200 | 543 |
| 114 | " | $N(C_4H_9)_2$ | $OCH_3$ | CN | CN | H | H | - | 679 | 157000 | 625 |
| 115 | OH | H | $C_2H_5$<br>$NHCOCH$<br>$C_4H_9$ | H | H | H | H | -O- | 413 | 17100 | 439 |

Tabelle 3 (Fortsetzung)

| | $X_1$ | $Y_1$ | $Z_1$ | $R_1$ | $R_2$ | $W_1$ | $R_3$ | $R_4$ | $\lambda_{max}^{CHCl_3}$ | $\varepsilon_{mol}$ | $\lambda_{max}^{Gel}$ |
|---|---|---|---|---|---|---|---|---|---|---|---|
| 116 | OH | H | 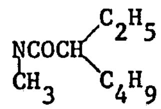 | H | H | H | H | -O- | 403 | 26700 | 399 |
| 117 | OH | H | " | H | H | H | H | -CH=CH- | 456 | 43100 | 460 |
| 118 | OH | H | 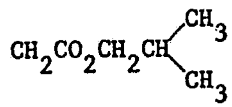 | H | H | H | H | -CH=CH- | 450 | 53800 | 440 |
| 119 | OH | H | $CH_2CO_2(C_2H_4O)_2CH_3$ | H | H | H | H | $-SO_2-$ | 413 | 18100 | 403 |
| 120 | OH | H | $O(C_2H_4O)_2CH_3$ | H | H | H | H | $-SO_2-$ | 467 | 14900 | 445 |
| 121 | OH | H | " | H | H | H | H | -O- | 439 | 18700 | 442 |
| 122 | OH | H | $O(C_2H_4O)_2CH_3$ | H | H | H | H | -CO- | 464 | 17100 | 465 |
| 123 | OH | H | $OCH_2CH(CH_3)_2$ | H | H | H | H | $-SO_2-$ | 473 | 15200 | 462 |
| 124 | OH | H | " | H | H | H | H | -O- | 445 | 16200 | 445 |
| 125 | OH | H | $C(CH_3)_2CH_2CH_3$ | H | H | H | H | $-SO_2-$ | 423 | 17500 | 419 |
| 126 | OH | H | " | H | H | H | H | -CO- | 417 | 19100 | 415 |
| 127 | OH | H | " | H | H | H | H | -CH=CH- | 456 | 52100 | 435 |
| 128 | OH | $OCH_2CH_2CH(CH_3)_2$ | $CH_3$ | H | H | H | H | -O- | 430 | 40800 | 420 |
| 129 | OH | $OC_2H_4OC_4H_9$ | $CH_3$ | H | H | H | H | -O- | 425 | 37200 | 420 |
| 130 | OH | $OC_2H_4OC_2H_4OCH_3$ | $CH_3$ | H | H | H | H | -O- | 425 | 38200 | 432 |

Tabelle 3 (Fortsetzung)

| | $X_1$ | $Y_1$ | $Z_1$ | $R_1$ | $R_2$ | $W_1$ | $R_3$ | $R_4$ | $\lambda_{max}^{CHCl_3}$ | $\varepsilon_{mol}$ | $\lambda_{max}^{Gel}$ |
|---|---|---|---|---|---|---|---|---|---|---|---|
| 131 | OH | $OCH_3$ | $NHCOCH_2CH(CH_3)_2$ | H | H | H | H | -O- | 443 | 32400 | 430 |
| 132 | OH | $OC_3H_7$ | $CH_3$ | H | H | H | H | $-SO_2-$ | 455 | 36700 | 401 |
| 133 | OH | $OC_3H_7$ | $CH_3$ | H | H | H | H | -O- | 433 | 38500 | 425 |
| 134 | OH | H | $CH_2CO_2CH_2CH(CH_3)_2$ | H | H | H | H | $-SO_2-$ | 412 | 18800 | 405 |
| 135 | OH | H | $C(CH_3)_3$ | H | H | $CH_3$ | H | $-SO_2-$ | 435 | 13300 | 430 |
| 136 | $NHCOC_2H_5$ | $NHCHCH_2OCH_3$<br>$CH_3$ | $OC_2H_4OCH_3$ | H | H | H | H | -CO- | 525 | 54400 | 526 |
| 137 | $NHCOC_2H_5$ | $NHCHCH_2OCH_3$<br>$CH_3$ | $OC_2H_4OCH_3$ | Br | H | H | H | $-SO_2-$ | 541 | 39400 | 539 |
| 138 | $NHCOC_2H_5$ | $NHCHCH_2OCH_3$<br>$CH_3$ | $OC_2H_4OCH_3$ | Br | H | H | H | -CO- | 543 | 53800 | 545 |
| 139 | $NHCOC_2H_5$ | $NHCHCH_2OCH_3$<br>$CH_3$ | $OC_2H_4OCH_3$ | Cl | H | H | H | $-SO_2-$ | 547 | 48100 | 544 |
| 140 | $NHCOC_2H_5$ | $N(C_2H_5)_2$ | $OC_2H_4OCH_3$ | H | H | H | H | $-SO_2-$ | 538 | 44800 | 536 |
| 141 | $NHCOCH_2CH(CH_3)_2$ | $N(C_2H_5)_2$ | $OC_2H_4OCH_3$ | H | H | H | H | -CO- | 574 | 42600 | 539 |
| 142 | $NHCOCH_2CH(CH_3)_2$ | $NHC_4H_9$ | $OCH_3$ | H | H | H | H | -CO- | 532 | 58500 | 527 |

Tabelle 3 (Fortsetzung)

| | $X_1$ | $Y_1$ | $Z_1$ | $R_1$ | $R_2$ | $W_1$ | $R_3$ | $R_4$ | $\lambda^{CHCl_3}_{max}$ | $\varepsilon_{mol}$ | $\lambda^{Gel}_{max}$ |
|---|---|---|---|---|---|---|---|---|---|---|---|
| 143 | $NHCOCH_2CH(CH_3)_2$ | $NHC_4H_9$ | $OCH_3$ | Br | H | H | H | $-SO_2-$ | 549 | 41900 | 557 |
| 144 | $NHPO(OC_2H_5)_2$ | $NHCHCH_2CH(CH_3)_2$<br>$CH_3$ | $OCH_3$ | H | H | H | H | -CH=CH- | 534 | 64200 | 539 |
| 145 | $NHPO(OC_2H_5)_2$ | $NHCHCH_2CH(CH_3)_2$<br>$CH_3$ | $OCH_3$ | Br | H | H | H | $-SO_2-$ | 549 | 66000 | - |
| 146 | $NHPO(OC_4H_9)_2$ | $N(C_2H_5)_2$ | $OCH_3$ | H | H | H | H | $-SO_2-$ | 522 | 44300 | 526 |
| 147 | $NHPO(OC_2H_5)_2$ | $NHCHCH_2CH(CH_3)_2$ | $OCH_3$ | H | H | H | H | -CO- | 521 | 48700 | 526 |
| 148 | $NHPO(OC_2H_5)_2$ | $(CH_3)_2CHCH_2CHNH$<br>$CH_3$ | $OCH_3$ | H | H | H | $>CH_2$ | - | 532 | 50100 | 537/564 |
| 149 | $NHPO(OC_2H_5)_2$ | $(CH_3)_2CHCH_2CH-NH$<br>$CH_3$ | $OCH_3$ | H | H | H | $>CO$ | - | 550 | 37900 | 554 |

Beispiel 3

20,2 mg Farbstoff der Formel

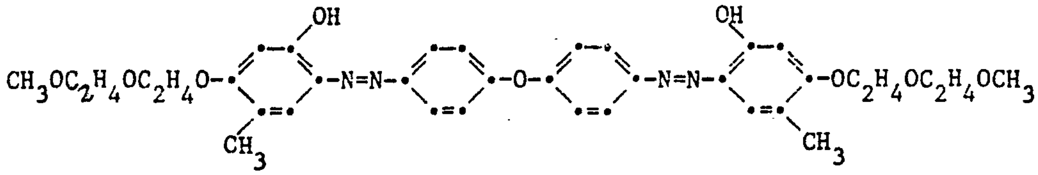

werden in 2 ml eines Gemisches von Aethylacetat und trikresylphosphat (Mischungsverhältnis 9 : 1) gelöst und zu einer Mischung aus 6,6 ml 6 %iger wässeriger Gelatinelösung, 0,9 ml destilliertem Wasser und 0,5 ml einer 8 %igen Lösung des Natriumsalzes der Dibutylnaphthalinsulfonsäure gegeben und mit Ultraschall emulgiert.

2,5 ml der erhaltenen Emulsion werden mit 5 ml Wasser, 1,5 ml einer nicht sensibilisierten Gelatinesilberbromidjodidemulsion, die etwa 22 g Silber/kg Gelatine enthält, 1 ml 4 %iger Gelatinelösung und 1 ml einer 1 %igen Lösung eines Härters der Formel

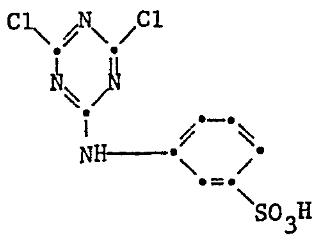

vermischt. Dieses Gemisch wird auf einen opaken Triacetatträger (Format 13 × 18 cm) gegossen und getrocknet. Hinter einem Stunfenkeil wird das so erhaltene lichtempfindliche Material belichtet und bei 24 °C wie folgt verarbeitet :

| | |
|---|---|
| Entwicklung | 6 Minuten |
| Wässerung | 4 Minuten |
| Silber- und Farbbleichung | 6 Minuten |
| Wässerung | 2 Minuten |
| Fixierung | 8 Minuten |
| Wässerung | 6 Minuten |
| Trocknung | |

Entwickler- und Fixierbäder sind übliche Bäder wie sie in der Schwarzweissphotographie verwendet werden. Das Silberfarbbleichbad besitzt pro Liter Lösung folgende Zusammensetzung :

| | |
|---|---|
| Sulfaminsäure | 100 g |
| m-Nitrobenzolsulfonsäure | 10 g |
| Kaliumjodid | 6 g |
| 2,3,6-Trimethylchinoxalin | 2 g |
| 4-Mercaptobuttersäure | 1 g |

Man erhält einen gegenläufigen gelben Keil, der an der ursprünglich höchsten Silberdichte vollständig auf weiss gebleicht ist. Das Bild zeichnet sich durch hohe Brillanz und Lichtechtheit aus.

Beispiel 4

11,4 mg Farbstoff der Formel

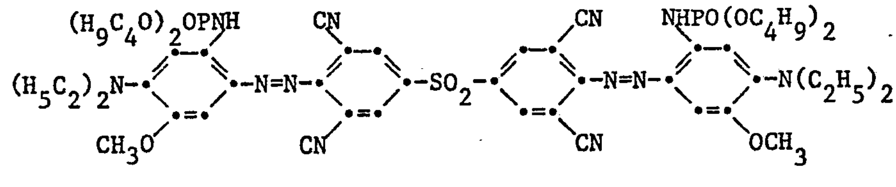

werden in 2 ml eines Gemisches (Mischungsverhältnis 9 : 1) von Aethylacetat und Trikresylphosphat gelöst.

Dieses Gemisch wird mit 7 ml 5 %iger Gelatinelösung und 0,5 ml 8 %iger wässriger Lösung des

Natriumsalzes der Dibutylnaphthalinsulfonsäure zu einer homogenen Mischung emulgiert. Zu 2,5 ml dieser Farbstoffemulsion gibt man 5 ml Wasser, 0,5 ml einer unsensibilisierten Gelatinesilberbromidemulsion, die ca. 22 g Silber pro kg Gelatine enthält, 2,0 ml 4 %ige Gelatinelösung und 1 ml 1 %iger Härterlösung. Dieses Gemisch wird auf eine opake Triacetatfolie von 13 × 18 cm gegossen und getrocknet. Das so erhaltene lichtempfindliche Material wird hinter einem Stufenkeil mit weissem Licht belichtet und bei 30 °C wie folgt verarbeitet :

| | |
|---|---|
| Entwicklung | 3 Minuten |
| Wässerung | 1 Minuten |
| Silber- und Farbbleichung | 5 Minuten |
| Wässerung | 1 Minuten |
| Fixierung | 4 Minuten |
| Wässerung | 6 Minuten |
| Trocknung | |

Das Entwicklerbad hat pro Liter Lösung folgende Zusammensetzung :

| | |
|---|---|
| Natriumsulfat | 50 g |
| 1-Phenyl-3-pyrazolidon | 0,2 g |
| Hydrochinon | 6 g |
| Natriumcarbonat | 35 g |
| Kaliumbromid | 4 g |
| Benztriazol | 0,3 g |

Das Silberfarbbleichbad hat pro Liter Lösung die Zusammensetzung :

| | |
|---|---|
| konzentrierte Schwefelsäure | 28 ml |
| m-Nitrobenzolsulfonsäure (Natriumsalz) | 10 g |
| Kaliumjodid | 6 g |
| Bis-(2-cyanoäthyl)-(2-sulfoäthyl)-phosphin (Natriumsalz) | 3 g |
| 2,3-Dimethylchinoxalin | 1,5 g |

Das Fixierbad enthält pro Liter Lösung :

| | |
|---|---|
| Natriumthiosulfat | 200 g |
| Natriummetabisulfit | 20 g |

Man erhält einen brillanten, lichtechten Cyankeil, der an den Stellen der ursprünglich grössten Silberdichte vollständig auf Weiss gebleicht ist.

**Ansprüche**

1. Verbindungen der Formel

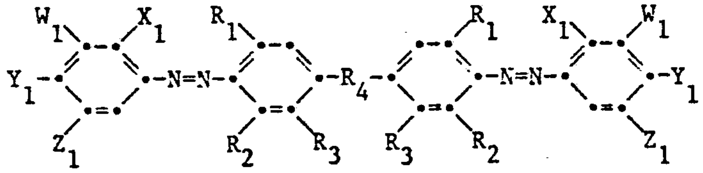

(1)

worin

$X_1$ Wasserstoff, Alkyl oder Alkoxy mit je 1 bis 6 Kohlenstoffatomen, $-NL_1COM_1$, worin $L_1$ Wasserstoff oder Alkyl mit 1 bis 4 Kohlenstoffatomen und $M_1$ gegebenenfalls mit Carbalkoxy mit 2 bis 5 Kohlenstoffatomen oder mit Alkoxy mit 1 bis 4 Kohlenstoffatomen substituiertes Alkyl oder Alkoxy mit 1 bis 20 Kohlenstoffatomen ist, oder $X_1$ $-NL_1P(O)(OG_1)_2$, worin $L_1$ die oben angegebene Bedeutung hat und $G_1$ Alkyl mit 1 bis 12 Kohlenstoffatomen ist, oder $X_1$ Alkylsulfonamid mit 1 bis 20 Kohlenstoffatomen oder Hydroxyl,

$Y_1$ Wasserstoff, Alkyl mit 1 bis 6 Kohlenstoffatomen, Alkoxy mit 1 bis 12 Kohlenstoffatomen, $-(OC_2H_4)_{n1}-OU_1$, worin $U_1$ Wasserstoff, Alkyl mit 1 bis 6 Kohlenstoffatomen oder Phenyl und $n_1$ 1, 2 oder 3 ist, oder $Y_1$ N-alkyl- oder N,N-dialkylsubstituiertes Amino, wobei die Alkylteile je 1 bis 8 Kohlenstoffatome enthalten und gegebenenfalls mit elektronegativen Gruppen substituiert sind, oder $Y_1$ $-NL_2COM_2$, worin $L_2$ Wasserstoff oder Alkyl mit 1 bis 6 Kohlenstoffatomen, und $M_2$ Alkyl mit 1 bis 12 Kohlenstoffatomen, Alkoxy, mit 1 bis 4 Kohlenstoffatomen oder $-O-(C_2H_4O)_{n1}-U_2$ ist, worin $U_2$ Alkyl mit 1 bis 8 Kohlenstoffatomen ist und $n_1$ die oben angegebene Bedeutung hat,

$Z_1$ Wasserstoff, Alkyl mit 1 bis 12 Kohlenstoffatomen, $-CH_2CO_2R_5$, worin $R_5$ Alkyl mit 1 bis 8

Kohlenstoffatomen oder $-(C_2H_4O)_{n1}-U_1$ ist, worin $U_1$ und $n_1$ die oben angegebenen Bedeutungen haben, oder $Z_1$ Alkoxy mit 1 bis 8 Kohlenstoffatomen, $-(OC_2H_4)_{n1}-OU_1$, worin $U_1$ und $n_1$ die oben angegebenen Bedeutungen haben oder $Z_1$ $-NL_2COM_3$, worin $L_2$ die oben angegebenen Bedeutungen hat und $M_3$ Alkyl mit 1 bis 18 Kohlenstoffatomen ist, oder $Z_1$ Carbalkoxy mit 2 bis 19 Kohlenstoffatomen, $-CO(OC_2H_4)_{n1}-OU_1$, worin $U_1$ und $n_1$ die oben angegebenen Bedeutungen haben, oder $Z_1$ Halogen oder diejenigen Atome bedeutet, um zusammen mit $Y_1$ einen gegebenenfalls mit Alkyl mit 1 bis 4 Kohlenstoffatomen substituierten, 5- oder 6-gliedrigen, gesättigten oder ungesättigten Ring zu bilden,

$W_1$ Wasserstoff, Alkyl oder Alkoxy mit je 1 bis 4 Kohlenstoffatomen ist,

$R_1$ und $R_2$ unabhängig voneinander Wasserstoff, Halogen, Cyano, Nitro oder $-SO_2U_3$ sind, worin $U_3$ gegebenenfalls mit Hydroxyl oder Alkoxy mit 1 bis 6 Kohlenstoffatomen substituiertes Alkyl mit 1 bis 6 Kohlenstoffatomen oder Phenyl ist,

$R_4$ die direkte chemische Bindung oder ein Brückenglied der Formel $-O-$, $-CO-$, $-SO_2-$, $-(CH_2)_{m1}-$, worin $m_1$ ganze Zahlen von 1 bis 8 bedeutet oder $-CH=CH-$ ist,

$R_3$ Wasserstoff oder Alkyl mit 1 bis 12 Kohlenstoffatomen ist oder beide Reste $R_3$ zusammen ein Brückenglied der Formel $-CH_2-$ oder $-CO-$ sein können, wenn $R_4$ die direkte chemische Bindung ist, und mindestens zwei der Substituenten $W_1$, $X_1$, $Y_1$ und $Z_1$ von Wasserstoff verschieden sind, $X_1$ von Hydroxyl verschieden ist, wenn $Z_1$ Wasserstoff ist, und $Z_1$ von Methyl, tert.Butyl und iso-Hexyl verschieden ist, wenn $R_4$ die direkte chemische Bindung, $-O-$, $-CH_2-$ oder $-CH = CH-$ ist, und die Verbindungen der Formel

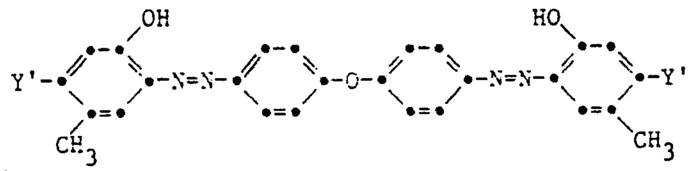

(100)

worin die Substituenten Y' jeweils $-OC_2H_4CH(CH_3)_2$, $-OC_2H_4OC_4H_9$, $-OC_2H_4OC_2H_4OCH_3$ oder $-OC_3H_7$ sind.

2. Verbindungen nach Anspruch 1 der Formel (1), worin

$X_1$ Alkoxy mit je 1 bis 6 Kohlenstoffatomen, $-NL_1COM_1$, worin $L_1$ Wasserstoff oder Alkyl mit 1 bis 4 Kohlenstoffatomen und $M_1$ gegebenenfalls mit Carbalkoxy mit 2 bis 5 Kohlenstoffatomen oder mit Alkoxy mit 1 bis 4 Kohlenstoffatomen substituiertes Alkyl oder Alkoxy mit 1 bis 20 Kohlenstoffatomen ist, oder $X_1$ $-NL_1P(O)(OG_1)_2$, worin $L_1$ die oben angegebene Bedeutung hat und $G_1$ Alkyl mit 1 bis 12 Kohlenstoffatomen ist, oder $X_1$ Alkylsulfonamid mit 1 bis 20 Kohlenstoffatomen oder Hydroxyl,

$Z_1$ Alkyl mit 1 bis 12 Kohlenstoffatomen, $-CH_2CO_2R_5$, worin $R_5$ Alkyl mit 1 bis 8 Kohlenstoffatomen oder $-(C_2H_4O)_{n1}-U_1$ ist, worin $U_1$ und $n_1$ die oben angegebenen Bedeutungen haben, oder $Z_1$ Alkoxy mit 1 bis 8 Kohlenstoffatomen, $-(OC_2H_4)_{n1}-OU_1$, worin $U_1$ und $n_1$ die oben angegebenen Beudeutungen haben, oder $Z_1$ $-NL_2COM_3$, worin $L_2$ die oben angegebenen Bedeutungen hat, und $M_3$ Alkyl mit 1 bis 18 Kohlenstoffatomen ist, oder $Z_1$ Carbalkoxy mit 2 bis 19 Kohlenstoffatomen, $-CO(OC_2H_4)_{n1}-OU_1$, worin $U_1$ und $n_1$ die oben angegebenen Bedeutungen haben, oder $Z_1$ Halogen oder diejenigen Atome bedeutet, um zusammen mit $Y_1$ einen gegebenenfalls mit Alkyl mit 1 bis 4 Kohlenstoffatomen substituierten, 5- oder 6-gliedrigen, gesättigten oder ungesättigten Ring zu bilden,

$Y_1$, $W_1$, $R_1$, $R_2$, $R_3$ und $R_4$ die in Anspruch 1 angegebenen Bedeutungen haben,

wobei mindestens einer der Substituenten $W_1$, $Y_1$ und $Z_1$ von Wasserstoff verschieden ist, und $X_1$ von Hydroxyl verschieden ist, wenn $Z_1$ Wasserstoff ist, und $Z_1$ von Methyl, tert.Butyl und iso-Hexyl verschieden ist, wenn $R_4$ die direkte chemische Bindung $-O-$, $-CH_2-$ oder $-CH=CH-$ ist, und die Verbindungen der Formel

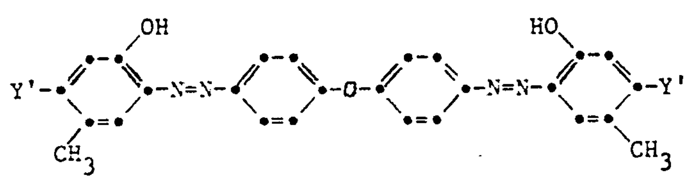

(100)

worin die Substituenten Y' jeweils $-OC_2H_4CH(CH_3)_2$, $-OC_2H_4OC_4H_9$, $-OC_2H_4OC_2H_4OCH_3$ oder $-OC_3H_7$ sind.

3. Verbindungen nach Anspruch 1 der Formel

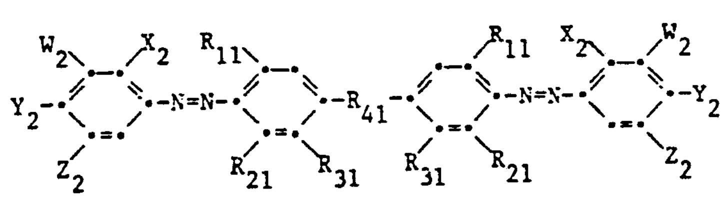

(2)

worin

$X_2$ Methoxy, $-NL_{11}COM_{11}$, worin $L_{11}$ Wasserstoff oder Methyl und $M_{11}$ gegebenenfalls mit Carbalkoxy mit 2 bis 5 Kohlenstoffatomen oder mit Aethoxy oder Methoxy substituiertes Alkyl oder Alkoxy mit 1 bis 16 Kohlenstoffatomen ist, oder $X_2$ $-NL_{11}P(O)(OG_{11})_2$, worin $L_{11}$ die oben angegebene Bedeutung hat und $G_{11}$ Alkyl mit 1 bis 8 Kohlenstoffatomen ist, oder $X_2$ Alkylsulfon amid mit 1 bis 16 Kohlenstoffatomen oder Hydroxyl,

$Y_2$ Wasserstoff, Alkyl mit 1 bis 4 Kohlenstoffatomen, Alkoxy mit 1 bis 12 Kohlenstoffatomen, $-(OC_2H_4)_{n1}-OU_{11}$, worin $U_{11}$ Wasserstoff, Alkyl mit 1 bis 4 Kohlenstoffatomen oder Phenyl ist und $n_1$ die oben angegebene Bedeutung hat, oder $Y_2$ N-alkyl- oder N,N-dialkylsubstituiertes Amino, wobei die Alkylteile je 1 bis 8 Kohlenstoffatome enthalten und gegebenenfalls mit Methoxy, Aethoxy, Acetoxy, Hydroxyl oder Cyano substituiert sind, oder $Y_2$ $-NL_{21}COM_{21}$, worin $L_{21}$ Wasserstoff oder Alkyl mit 1 bis 4 Kohlenstoffatomen ist und $n_1$ die oben angegebene Bedeutung hat,

$Z_2$ Wasserstoff, Alkyl mit 1 bis 8 Kohlenstoffatomen, $-CH_2CO_2R_{51}$, worin $R_{51}$ Alkyl mit 1 bis 8 Kohlenstoffatomen oder $-(C_2H_4O)_{n1}-U_{11}$ ist, worin $U_{11}$ und $n_1$ die oben angegebenen Bedeutungen haben, oder $Z_2$ ist Alkoxy mit 1 bis 8 Kohlenstoffatomen, $-(OC_2H_4)_{n1}-OU_{11}$, worin $U_{11}$ und $n_1$ die oben angegebenen Bedeutungen haben ; $-NL_{21}COM_{31}$, worin $L_{21}$ die oben angegebene Bedeutung hat und $M_{31}$ Alkyl mit 1 bis 12 Kohlenstoffatomen ist ; oder $Z_2$ Carbalkoxy mit 2 bis 12 Kohlenstoffatomen, $-CO(OC_2H_4)_{n1}-OU_{11}$, worin $U_{11}$ und $n_1$ die oben angegebenen Bedeutungen haben ; oder $Z_2$ Chlor, Brom oder diejenigen Atome bedeutet, um zusammen mit $Y_2$ einen gegebenenfalls methylsubstituierten, 6-gliedrigen, gesättigten, gegebenenfalls 1 oder 2 Heteroatome enthaltenden Ring zu bilden,

$W_2$ Wasserstoff oder Methyl ist,

$R_{11}$ und $R_{21}$ unabhängig voneinander Wasserstoff, Chlor, Brom, Cyano, Nitro oder $SO_2U_{31}$ sind, worin $U_{31}$ gegebenenfalls mit Hydroxyl oder Methoxy substituiertes Alkyl mit 1 bis 4 Kohlenstoffatomen oder Phenyl ist,

$R_{41}$ die direkte chemische Bindung oder ein Brückenglied der Formel $-O-$, $-CO-$, $-SO_2-$, $-(CH_2)_{m2}-$, worin $m_2$ eine ganze Zahl von 1 bis 6 ist, oder $-CH{=}CH-$ ist,

$R_{31}$ Wasserstoff oder Alkyl mit 1 bis 8 Kohlenstoffatomen ost oder beide Reste $R_{31}$ zusammen ein Brückenglied der Formel $-CH_2-$ oder $-CO-$ sein können, wenn $R_{41}$ die direkte chemische Bindung ist, und

mindestens einer der Substituenten $Y_2$, $Z_2$, $W_2$ von Wasserstoff verschieden ist, und $X_2$ von Hydroxyl verschieden ist, wenn $Z_2$ Wasserstoff ist, und $Z_2$ von Methyl, tert.Butyl und iso-Hexyl verschieden ist, wenn $R_{41}$ die direkte chemische Bindung, $-O-$, $-CH_2-$ oder $-CH{=}CH-$ ist, und die Verbindungen der Formel

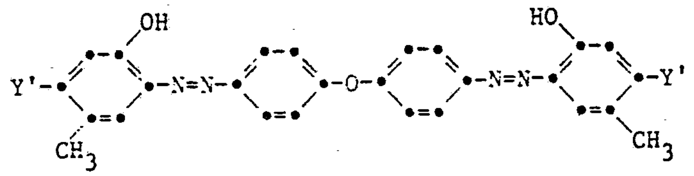

(100)

worin die Substituenten Y' jeweils $-OC_2H_4CH(CH_3)_2$, $-OC_2H_4OC_4H_9$, $-OC_2H_4OC_2H_4OCH_3$ oder $-OC_3H_7$ sind.

4. Verbindungen nach Anspruch 3 der Formel

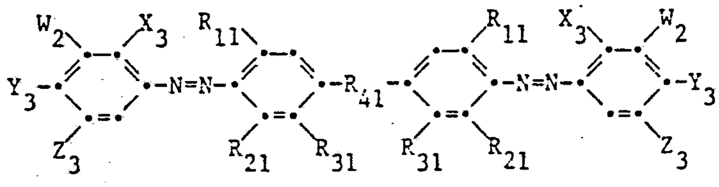

(3)

worin

$X_3$ Methoxy, $-NHCOM_{12}$, worin $M_{12}$ gegebenenfalls mit Carbalkoxy mit 2 bis 5 Kohlenstoffatomen oder mit Methoxy oder Aethoxy substituiertes Alkyl mit 1 bis 16 Kohlenstoffatomen ist, oder $X_3$ $-NHP(O)(OG_{12})_2$, worin $G_{12}$ Alkyl mit 1 bis 4 Kohlenstoffatomen ist, oder $X_3$ Alkylsulfonamid mit 1 bis 12 Kohlenstoffatomen oder Hydroxyl,

$Y_3$ Wasserstoff, Alkoxy mit 1 bis 12 Kohlenstoffatomen, $-(OC_2H_4)_{n2}-OU_{12}$, worin $U_{12}$ Wasserstoff oder Alkyl mit 1 bis 4 Kohlenstoffatomen und $n_2$ 1 oder 2 ist, oder $Y_3$ N-alkyl- oder N,N-dialkylsubstituiertes Amino, wobei die Alkylteile je 1 bis 8 Kohlenstoffatome enthalten und gegebenenfalls mit Methoxy, Aethoxy, Hydroxyl oder Cyano substituiert sind ; oder $Y_3$ $-NHCOM_{22}$, worin $M_{22}$ Alkyl mit 1 bis 4 Kohlenstoffatomen, Methoxy oder $-O-(C_2H_4O)_{n2}-CH_3$ ist, worin $n_2$ die oben angegebene Bedeutung hat,

$Z_3$ Wasserstoff, Alkyl mit 1 bis 8 Kohlenstoffatomen, $-CH_2CO_2R_{52}$, worin $R_{52}$ Alkyl mit 1 bis 8 Kohlenstoffatomen oder $-(C_2H_4O)_{n2}-U_{12}$ ist, worin $U_{12}$ und $n_2$ die oben angegebenen Bedeutungen

haben, ferner $Z_3$ Alkoxy mit 1 bis 8 Kohlenstoffatomen, $-(OC_2H_4)_{n2}-OU_{12}$, worin $U_{12}$ und $n_2$ die oben angegebene Bedeutung haben ; $-NL_{21}COM_{32}$, worin $L_{21}$ die oben angegebene Bedeutung hat und $M_{32}$ Alkyl mit 1 bis 8 Kohlenstoffatomen ist, oder $Z_3$ Carbalkoxy mit 2 bis 5 Kohlenstoffatomen oder $-CO(OC_2H_4)_{n2}-OU_{11}$ ist worin $U_{11}$ und $n_2$ die oben angegebene Bedeutung haben,

$W_2$, $R_{11}$, $R_{21}$, $R_{31}$ und $R_{41}$ die oben angegebene Bedeutung haben,
und mindestens einer der Substituenten $Y_3$, $Z_3$, $W_2$ von Wasserstoff verschieden ist, und $X_3$ von Hydroxyl verschieden ist, wenn $Z_3$ Wasserstoff ist, und $Z_3$ von Methyl, tert.Butyl und iso-Hexyl verschieden ist, wenn $R_{41}$ die direkte chemische Bindung, —O—, $-CH_2-$ oder —CH=CH— ist, und die Verbindungen der Formel

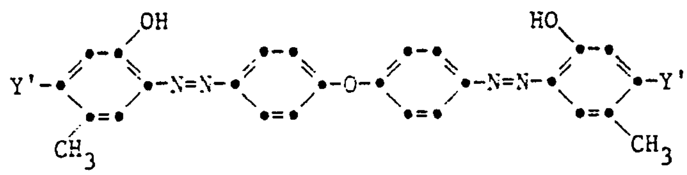

(100)

worin die Substituenten Y' jeweils $-OC_2H_4CH(CH_3)_2$, $-OC_2H_4OC_4H_9$, $-OC_2H_4OC_2H_4OCH_3$ oder $-OC_3H_7$ sind.

5. Verbindungen nach Anspruch 3 der Formel

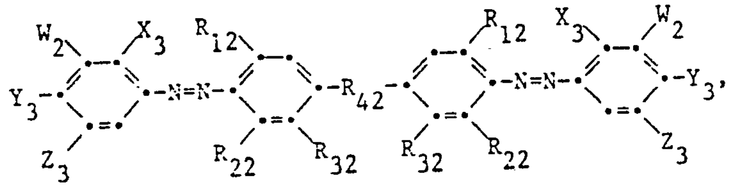

(4)

worin

$R_{12}$ und $R_{22}$ unabhängig voneinander Wasserstoff, Chlor, Brom, Cyano, Nitro oder Methylsulfon sind,

$R_{42}$ die direkte chemische Bindung oder ein Brückenglied der Formel —O—, —CO—, $-SO_2-$, $-(CH_2)_{m2}-$, worin $m_2$ die oben angegebene Bedeutung hat, oder —CH=CH— ist,

$R_{32}$ Wasserstoff oder Alkyl mit 1 bis 4 Kohlenstoffatomen ist oder die beiden Reste $R_{32}$ ein Brückenglied der Formel $-CH_2-$ oder —CO— sein können, wenn $R_{42}$ die direkte chemische Bindung bedeutet,

$X_3$, $Y_3$, $Z_3$ und $W_2$ die oben angegebenen beteutungen haben, und
mindestens einer der Substituenten $Y_3$, $Z_3$, $W_2$ von Wasserstoff verschieden ist, und $X_3$ von Hydroxyl verschieden ist, wenn $Z_3$ Wasserstoff ist, und $Z_3$ von Methyl, tert.Butyl und iso-Hexyl verschieden ist, wenn $R_{42}$ die direkte chemische Bindung, —O—, $-CH_2-$ oder —CH=CH— ist, und die Verbindungen der Formel

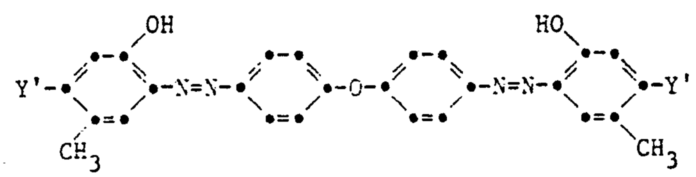

(100)

worin die Substituenten Y' jeweils $-OC_2H_4CH(CH_3)_2$, $-OC_2H_4OC_4H_9$, $-OC_2H_4OC_2H_4OCH_3$ oder $-OC_3H_7$ sind.

6. Verbindungen nach den Ansprüchen 4 und 5 der Formel

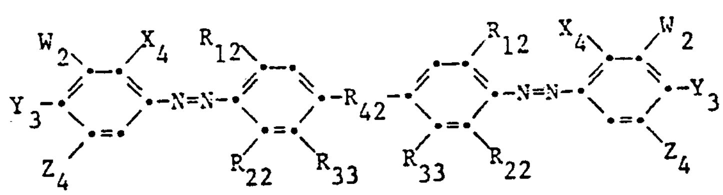

(5)

worin

$X_4$ $-NHCOM_{12}$ oder $-NHP(O)(OG_{12})_2$, worin $M_{12}$ und $G_{12}$ die oben angegebenen Bedeutungen haben, oder Hydroxyl,

$Z_4$ Wasserstoff, Alkyl oder Alkoxy mit 1 bis 8 Kohlenstoffatomen, $-CH_2CO_2R_{53}$, worin $R_{53}$ Alkyl mit 1

bis 4 Kohlenstoffatomen, $-(C_2H_4O)_2-CH_3$ oder $-C_2H_4O-CH_3$ ist, $-(OC_2H_4)_{n2}-OU_{12}$ oder $-NL_{21}COM_{32}$, ist, worin $U_{12}$, $n_2$, $L_{21}$ und $M_{32}$ die oben angegebenen Bedeutungen haben,

$R_{33}$ Wasserstoff oder Methyl ist und die beiden Reste $R_{33}$ zusammen ein Brückenglied der Formel $-CH_2-$ oder $-CO-$ sein können, wenn $R_{42}$ die direkte chemische Bindung ist,

$W_2$, $Y_3$, $R_{12}$, $R_{22}$ und $R_{42}$ die oben angegebenen Bedeutungen haben, und mindestens einer der Substituenten $W_2$, $Y_3$ und $Z_4$ Wasserstoff verschieden ist, und $X_4$ von Hydroxyl verschieden ist, wenn $Z_4$ Wasserstoff ist, und $Z_4$ von Methyl, tert.Butyl und iso-Hexyl verschieden ist, wenn $R_{42}$ die direkte chemische Bindung, $-O-$, $-CH_2-$ oder $-CH{=}CH-$ ist, und die Verbindungen der Formel

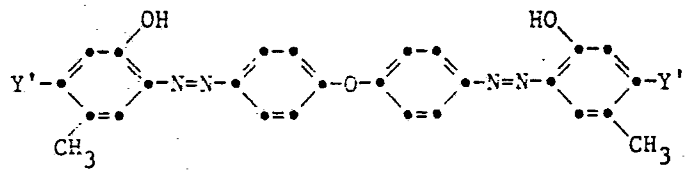

(100)

worin die Substituenten Y' jeweils $-OC_2H_4CH(CH_3)_2$, $-OC_2H_4OC_4H_9$, $-OC_2H_4OC_2H_4OCH_3$ oder $-OC_3H_7$ sind.

7. Verfahren zur Herstellung von Verbindungen gemäss Anspruch 1, dadurch gekennzeichnet, dass man ein Diamin der Formel

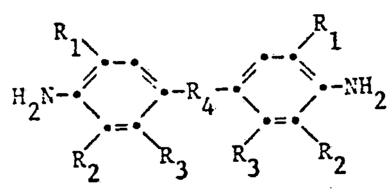

(11)

oder

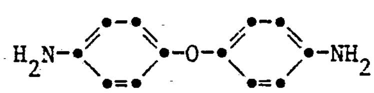

(11a)

worin $R_1$, $R_2$, $R_3$ und $R_4$ die in Anspruch 1 angegebenen Bedeutungen haben, tetrazotiert und mit einer Kupplungskomponente der Formel

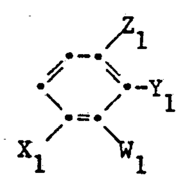

(12)

oder

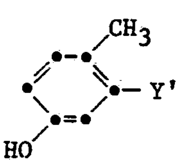

(12a)

worin $X_1$, $Y_1$, Y', $Z_1$ und $W_1$ die in Anspruch 1 angegebenen Bedeutungen haben, kuppelt.

8. Verwendung der Verbindungen nach einem der Ansprüche 1 bis 6 als Bildfarbstoffe in farbphotographischen Aufzeichnungsmaterialien für das Silberfarbbleichverfahren.

9. Farbphotographisches Aufzeichnungsmaterial für das Silberfarbbleichverfahren, das in mindestens einer Silberhalogenidemulsionsschicht oder in einer an die Silberhalogenidemulsionsschicht grenzenden Kolloidschicht mindestens einen diffusionsfesten, bleichbaren und öllöslichen Disazofarbstoff nach einem der Ansprüche 1 bis 6 enthält.

10. Das mit dem farbphotographischen Aufzeichnungsmaterial nach Anspruch 9 hergestellte photographische Bild.

**Claims**

1. A compound of the formula

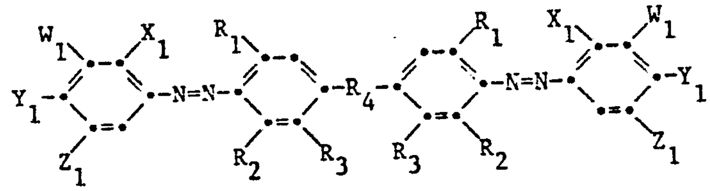

(1)

in which

$X_1$ is hydrogen, alkyl or alkoxy, each of which has 1 to 6 carbon atoms, or $—NL_1COM_1$, in which $L_1$ is hydrogen or alkyl having 1 to 4 carbon atoms and $M_1$ is alkyl or alkoxy, each of which has 1 to 20 carbon atoms and is unsubstituted or substituted by carbalkoxy having 2 to 5 carbon atoms or by alkoxy having 1 to 4 carbon atoms, or $X_1$ is $—NL_1P(O)(OG_1)_2$, in which $L_1$ is as defined above and $G_1$ is alkyl having 1 to 12 carbon atoms, or $X_1$ is alkylsulfonamide having 1 to 20 carbon atoms or hydroxyl,

$Y_1$ is hydrogen, alkyl having 1 to 6 carbon atoms, alkoxy having 1 to 12 carbon atoms or $—(OC_2H_4)_{n1}—OU_1$, in which $U_1$ is hydrogen, alkyl having 1 to 6 carbon atoms or phenyl and $n_1$ is 1, 2 or 3, or $Y_1$ is N-alkyl-substituted or N,N-dialkyl-substituted amino, the alkyl moieties of which each contain 1 to 8 carbon atoms and are unsubstituted or substituted by electronegative groups, or $Y_1$ is $—NL_2COM_2$, in which $L_2$ is hydrogen or alkyl having 1 to 6 carbon atoms and $M_2$ is alkyl having 1 to 12 carbon atoms, alkoxy having 1 to 4 carbon atoms or $—O—(C_2H_4O)_{n1}—U_2$, in which $U_2$ is alkyl having 1 to 8 carbon atoms and $n_1$ is as defined above,

$Z_1$ is hydrogen, alkyl having 1 to 12 carbon atoms or $—CH_2CO_2R_5$, in which $R_5$ is alkyl having 1 to 8 carbon atoms or $—(C_2H_4O)_{n1}—U_1$, in which $U_1$ and $n_1$ are as defined above, or $Z_1$ is alkoxy having 1 to 8 carbon atoms or $—(OC_2H_4)_{n1}—OU_1$ in which $U_1$ and $n_1$ are as defined above, or $Z_1$ is $—NL_2COM_3$, in which $L_2$ is as defined above and $M_3$ is alkyl having 1 to 18 carbon atoms, or $Z_1$ is carbalkoxy having 2 to 19 carbon atoms or $—CO(OC_2H_4)_{n1}—OU_1$, in which $U_1$ and $n_1$ are as defined above, or $Z_1$ is halogen or represents those atoms which are required in order to form, together with $Y_1$, a 5-membered or 6-membered, saturated or unsaturated ring which is unsubstituted or substituted by alkyl having 1 to 4 carbon atoms,

$W_1$ is hydrogen, alkyl or alkoxy, each of which has 1 to 4 carbon atoms,

$R_1$ and $R_2$ independently of one another are hydrogen, halogen, cyano, nitro or $—SO_2U_3$, in which $U_3$ is alkyl having 1 to 6 carbon atoms, which is unsubstituted or substituted by hydroxyl or alkoxy having 1 to 6 carbon atoms, or is phenyl,

$R_4$ is the direct chemical bond or a bridge member of the formula $—O—$, $—CO—$, $—SO_2—$, $—(CH_2)_{m1}—$, in which $m_1$ is an integer from 1 to 8, or $—CH{=}CH—$, and

$R_3$ is hydrogen or alkyl having 1 to 12 carbon atoms or, if $R_4$ is the direct chemical bond, the two radicals $R_3$ together can be a bridge member of the formula $—CH_2—$ or $—CO—$;

with the proviso that at least two of the substituents $W_1$, $X_1$, $Y_1$ and $Z_1$ are different from hydrogen, $X_1$ is different from hydroxyl if $Z_1$ is hydrogen, and $Z_1$ is different from methyl, tert-butyl and i-hexyl if $R_4$ is the direct chemical bond $—O—$, $—CH_2—$ or $—CH{=}CH—$; and a compound of the formula

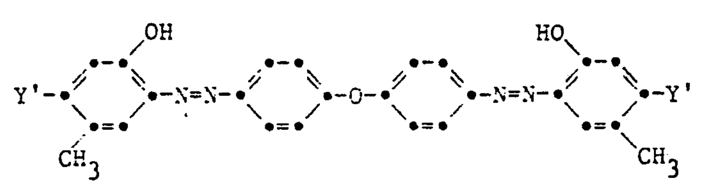

(100)

wherein Y' is $—OC_2H_4CH(CH_3)_2$, $—OC_2H_4OC_4H_9$, $—(OC_2H_4)_2OCH_3$ or $—OC_3H_7$.

2. A compound according to claim 1 of the formula (1), in which

$X_1$ is alkoxy having 1 to 6 carbon atoms or $—NL_1—COM_1$, in which $L_1$ is hydrogen or alkyl having 1 to 4 carbon atoms and $M_1$ is alkyl or alkoxy, each of which has 1 to 20 carbon atoms and is unsubstituted or substituted by carbalkoxy having 2 to 5 carbon atoms or by alkoxy having 1 to 4 carbon atoms, or $X_1$ is $—NL_1P(O)(OG_1)_2$, in which $L_1$ is as defined above and $G_1$ is alkyl having 1 to 12 carbon atoms, or $X_1$ is alkylsulfonamide having 1 to 20 carbon atoms, or hydroxyl,

$Z_1$ is alkyl having 1 to 12 carbon atoms or $—CH_2CO_2R_5$, in which $R_5$ in which $R_5$ is alkyl having 1 to 8 carbon atoms or $—(C_2H_4O)_{n1}—U_1$, in which $U_1$ and $n_1$ are as defined above, or $Z_1$ is alkoxy having 1 to 8 carbon atoms or $—(OC_2H_4)_{n1}—OU_1$, in which $U_1$ and $n_1$ are as defined above, or $Z_1$ is $—NL_2COM_3$, in which $L_2$ is as defined above and $M_3$ is alkyl having 1 to 18 carbon atoms, or $Z_1$ is carbalkoxy having 2 to 19 carbon atoms or $—CO(OC_2H_4)_{n1}—OU_1$, in which $U_1$ and $n_1$ are as defined above, or $Z_1$ is halogen or represents those atoms which are required in order to form, together with $Y_1$, a 5-membered or 6-

membered, saturated or unsaturated ring which is unsubstituted or substituted by alkyl having 1 to 4 carbon atoms, and

$Y_1$, $W_1$, $R_1$, $R_2$, $R_3$ and $R_4$ are as defined in claim 1,

with the proviso that, at least one of the substituents $W_1$, $Y_1$ and $Z_1$ is different from hydrogen, $X_1$ is different from hydroxyl if $Z_1$ is hydrogen, and $Z_1$ is different from methyl, tert-butyl and i-hexyl if $R_4$ is the direct chemical bond —O—, —$CH_2$— or —CH=CH— ; and a compound of the formula

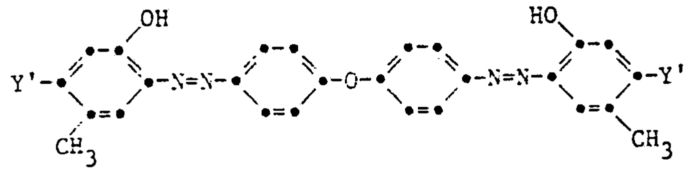

(100)

wherein Y' is —$OC_2H_4CH(CH_3)_2$, —$OC_2H_4OC_4H_9$, —$(OC_2H_4)_2OCH_3$ or —$OC_3H_7$.

3. A compound according to claim 1 of the formula

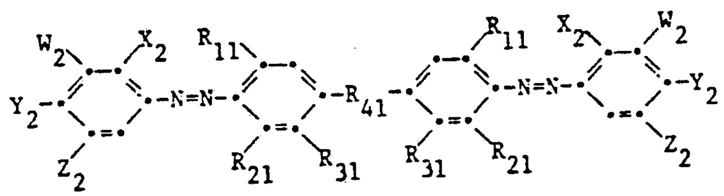

(2)

in which

$X_2$ is methoxy or —$NL_{11}COM_{11}$, in which $L_{11}$ is hydrogen or methyl and $M_{11}$ is alkyl or alkoxy, each of which has 1 to 16 carbon atoms and is unsubstituted or substituted by carbalkoxy having 2 to 5 carbon atoms or by ethoxy or methoxy, or $X_2$ is —$NL_{11}P(O)(OG_{11})_2$, in which $L_{11}$ is as defined above and $G_{11}$ is alkyl having 1 to 8 carbon atoms, or $X_2$ is alkylsulfonamide having 1 to 16 carbon atoms or hydroxyl,

$Y_2$ is hydrogen, alkyl having 1 to 4 carbon atoms, alkoxy having 1 to 12 carbon atoms or —$(OC_2H_4)_{n1}$—$OU_{11}$, in which $U_{11}$ is hydrogen, alkyl having 1 to 4 carbon atoms or phenyl and $n_1$ is as defined above, or $Y_2$ is N-alkylsubstituted or N,N-dialkylsubstituted amino, the alkyl moieties of which each contain 1 to 8 carbon atoms and are unsubstituted or substituted by methoxy, ethoxy, acetoxy, hydroxyl or cyano, or $Y_2$ is —$NL_{21}COM_{21}$, in which $L_{21}$ is hydrogen or alkyl having 1 to 4 carbon atoms and $n_1$ is as defined above,

$Z_2$ is hydrogen, alkyl having 1 to 8 carbon atoms or —$CH_2CO_2R_{51}$, in which $R_{51}$ is alkyl having 1 to 8 carbon atoms or —$(C_2H_4O)_{n1}$—$U_{11}$, in which $U_{11}$ and $n_1$ are as defined above, or $Z_2$ is alkoxy having 1 to 8 carbon atoms, —$(OC_2H_4)_{n1}$—$OU_{11}$, in which $U_{11}$ and $n_1$ are as defined above, or —$NL_{21}COM_{31}$, in which $L_{21}$ is as defined above and $M_{31}$ is alkyl having 1 to 12 carbon atoms, or $Z_2$ is carbalkoxy having 2 to 12 carbon atoms or —$CO(OC_2H_4)_{n1}$—$OU_{11}$, in which $U_{11}$ and $n_1$ are as defined above, or $Z_2$ is chlorine or bromine or represents those atoms which are required in order to form, together with $Y_2$, an unsubstituted or methyl-substituted, 6-membered, saturated ring which may contain 1 or 2 hetero-atoms,

$W_2$ is hydrogen or methyl,

$R_{11}$ and $R_{21}$ independently of one another are hydrogen, chlorine, bromine, cyano, nitro or —$SO_2U_{31}$, in which $U_{31}$ is alkyl having 1 to 4 carbon atoms, which is unsubstituted or substituted by hydroxyl or methoxy, or is phenyl,

$R_{41}$ is the direct chemical bond or a bridge member of the formula —O—, —CO—, —$SO_2$—, —$(CH_2)_{m2}$—, in which $m_2$ is an integer from 1 to 6, or —CH=CH—, and

$R_{31}$ is hydrogen or alkyl having 1 to 8 carbon atoms or, if $R_{41}$ is the direct chemical bond, the two radicals $R_{31}$ together can be a bridge member of the formula —$CH_2$— or —CO—,

with the proviso that at least of the substituents $Y_2$, $Z_2$ and $W_2$ is different from hydrogen, $X_2$ is different from hydroxyl if $Z_2$ is hydrogen, and $Z_2$ is different from methyl, tert-butyl and i-hexyl, if $R_{41}$ is the direct chemical bond —O—, —$CH_2$— or —CH=CH— ; and a compound of the formula

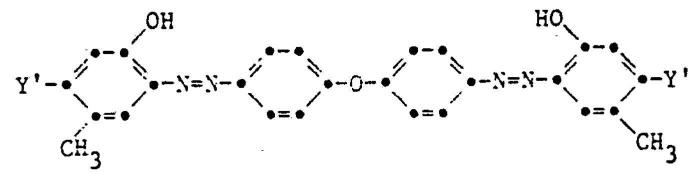

(100)

wherein Y' is —$OC_2H_4CH(CH_3)_2$, —$OC_2H_4OC_4H_9$, —$OC_2H_4OC_2H_4OCH_3$ or —$OC_3H_7$.

4. A compound according to claim 3 of the formula

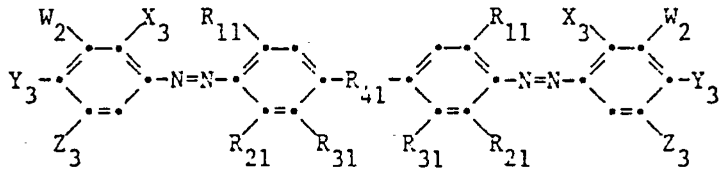

(3)

in which

$X_3$ is methoxy or —$NHCOM_{12}$, in which $M_{12}$ is alkyl having 1 to 16 carbon atoms, which is unsubstituted or substituted by carbalkoxy having 2 to 5 carbon atoms or by methoxy or ethoxy, or $X_3$ is —$NHP(O)(OG_{12})_2$, in which $G_{12}$ is alkyl having 1 to 4 carbon atoms, or $X_3$ is alkylsulfonamide having 1 to 12 carbon atoms or hydroxyl,

$Y_3$ is hydrogen, alkoxy having 1 to 12 carbon atoms or —$(OC_2H_4)_{n2}$—$OU_{12}$, in which $U_{12}$ is hydrogen or alkyl having 1 to 4 carbon atoms and $n_2$ is 1 or 2, or $Y_3$ is N-alkylsubstituted or N,N-dialkylsubstituted amino, the alkyl moieties of which each contain 1 to 8 carbon atoms and are unsubstituted or substituted by methoxy, ethoxy, acetoxy, hydroxyl or cyano, or $Y_3$ is —$NHCOM_{22}$, in which $M_{22}$ is alkyl having 1 to 4 carbon atoms, methoxy or —O—$(C_2H_4O)_{n2}$—$CH_3$, in which $n_2$ is as defined above,

$Z_3$ is hydrogen, alkyl having 1 to 8 carbon atoms or —$CH_2CO_2R_{52}$, in which $R_{52}$ is alkyl having 1 to 8 carbon atoms or —$(C_2H_4O)_{n2}$—$U_{12}$, in which $U_{12}$ and $n_2$ are as defined above, or $Z_3$ is alkoxy having 1 to 8 carbon atoms or —$(OC_2H_4)_{n2}$—$OU_{12}$, in which $U_{12}$ and $n_2$ are as defined above, or is —$NL_{21}COM_{32}$, in which $L_{21}$ is as defined above and $M_{32}$ is alkyl having 1 to 8 carbon atoms, or $Z_3$ is carbalkoxy having 2 to 5 carbon atoms or —$CO(OC_2H_4)_{n2}$—$OU_{11}$, in which $U_{11}$ and $n_2$ are as defined above, and

$W_2$, $R_{11}$, $R_{21}$, $R_{31}$ and $R_{41}$ are as defined above,

with the proviso that at least one of the substituents $Y_3$, $Z_3$ and $W_2$ is different from hydrogen, and $Z_3$ is different from hydroxyl if $Z_3$ is hydrogen, and $Z_3$ is different from methyl, tert-butyl and i-hexyl if $R_{41}$ is the direct chemical bond —O—, —$CH_2$— or —CH=CH—; and a compound of the formula

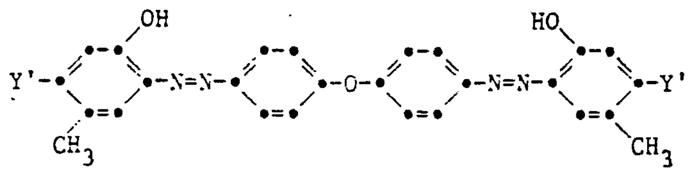

(100)

wherein Y' is —$OC_2H_4CH(CH_3)_2$, —$OC_2H_4OC_4H_9$, —$OC_2H_4OC_2H_4OCH_3$ or —$OC_3H_7$.

5. A compound according to claim 3, of the formula

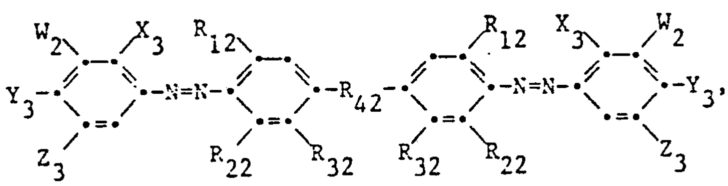

(4)

in which

$R_{12}$ and $R_{22}$ independently of one another are hydrogen, chlorine, bromine, cyano, nitro or methylsulfone,

$R_{42}$ is the direct chemical bond or a bridge member of the formula —O—, —CO—, —$SO_2$—, —$(CH_2)_m$—, in which $m_2$ is as defined above, or —CH=CH—,

$R_{32}$ is hydrogen or alkyl having 1 to 4 carbon atoms or, if $R_{42}$ is the direct chemical bond, the two radicals $R_{32}$ can be a bridge member of the formula —$CH_2$— or —CO—, and

$X_3$, $Y_3$, $Z_3$ and $W_2$ are as defined above,

with the proviso that at least one of the substituents $Y_3$, $Z_3$ and $W_2$ is different from hydrogen, $X_3$ is different from hydroxyl if $Z_3$ is hydrogen, and $Z_3$ is different from methyl, tert-butyl and i-hexyl if $R_{42}$ is the direct chemical bond —O—, —$CH_2$— or —CH=CH—; and a compound of the formula

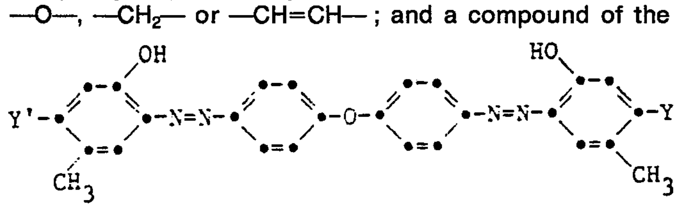

(100)

wherein Y' is —$OC_2H_4CH(CH_3)_2$, —$OC_2H_4OC_4H_9$, —$OC_2H_4OC_2H_4OCH_3$ or —$OC_3H_7$.

6. A compound according to either claim 4 or claim 5 of the formula

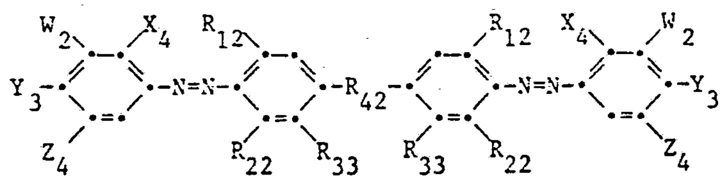

(5)

in which

$X_4$ is $-NHCOM_{12}$ or $-NHP(O)(OG_{12})_2$, in which $M_{12}$ and $G_{12}$ are as defined above, or is hydroxyl, $Z_4$ is hydrogen, alkyl or alkoxy, each of which has 1 to 8 carbon atoms, or $-CH_2CO_2R_{53}$, in which $R_{53}$ is alkyl having 1 to 4 carbon atoms, $-(C_2H_4O)_2-CH_3$ or $-C_2H_4O-CH_3$, or $Z_4$ is $-(OC_2H_4)_{n2}-OU_{12}$ or $-NL_{21}COM_{32}$, in which $U_{12}$, $n_2$, $L_{21}$ and $M_{32}$ are as defined above,

$R_{33}$ is hydrogen or methyl or, if $R_{42}$ is the direct chemical bond, the two radicals $R_{33}$ together can be a bridge member of the formula $-CH_2-$ or $-CO-$, and

$W_2$, $Y_3$, $R_{12}$, $R_{22}$ and $R_{42}$ are as defined above,

with the proviso that at least one of the substituents $W_2$, $Y_3$ and $Z_4$ is different from hydrogen, $X_4$ is different from hydroxyl if $Z_4$ is hydrogen, and $Z_4$ is different from methyl, tert-butyl and i-hexyl if $R_{42}$ is the direct chemical bond $-O-$, $-CH_2-$ or $-CH{=}CH-$; and a compound of the formula

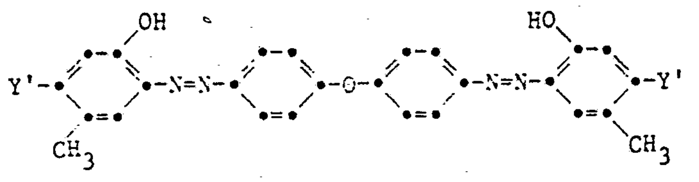

(100)

wherein Y' is $-OC_2H_4CH(CH_3)_2$, $-OC_2H_4OC_4H_9$, $-OC_2H_4OC_2H_4OCH_3$ or $-OC_3H_7$.

7. A process for the preparation of a compound according to claim 1, which comprises tetrazotising a diamine of the formula

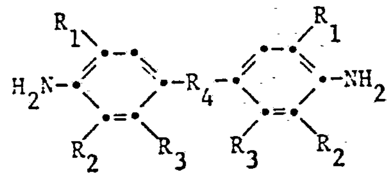

(11)

in which $R_1$, $R_2$, $R_3$ and $R_4$ are as defined in claim 1, and coupling the product with a coupling component of the formula

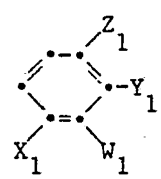

(12)

in which $X_1$, $Y_1$, $Z_1$ and $W_1$ are as defined in claim 1.

8. Use of a compound according to any one of claims 1 to 6 as an image dye in a colour-photographic recording material for the silver dye bleach process.

9. A colour-photographic recording material for the silver dye bleach process, which contains, in at least one silver halide emulsion layer or in a colloid layer adjacent to the silver halide emulsion layer, at least one diffusion-resistant, bleachable and oil-soluble disazo dye according to any one of claims 1 to 8.

10. A photographic image produced with the colour-photographic recording material according to claim 9.

**Revendications**

1. Composés de formule

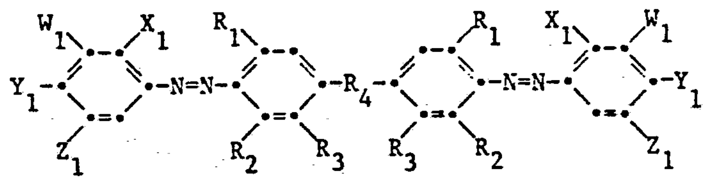

(1)

dans laquelle

$X_1$ est l'hydrogène, un groupe alkyle ou alcoxy ayant chacun 1 à 6 atomes de carbone, $—NL_1COM_1$, dans laquelle $L_1$ est l'hydrogène ou un groupe alkyle ayant 1 à 4 atomes de carbone, et $M_1$ est un groupe alkyle ou alcoxy ayant 1 à 20 atomes de carbone, éventuellement substitué par un groupe carbalcoxy ayant 2 à 5 atomes de carbone ou alcoxy ayant 1 à 4 atomes de carbone, ou $X_1$ est $—NL_1P(O)(OG_1)_2$, dans laquelle $L_1$ a la signification donnée ci-dessus et $G_1$ est un groupe alkyle ayant 1 à 12 atomes de carbone, ou $X_1$ est un groupe alkylsulfonamide ayant 1 à 20 atomes de carbone ou hydroxyle,

$Y_1$ est l'hydrogène, un groupe alkyle ayant 1 à 6 atomes de carbone, alcoxy ayant 1 à 12 atomes de carbone, $—(OC_2H_4)_{n1}—OU_1$, dans laquelle $U_1$ est l'hydrogène, un reste alkyle ayant 1 à 6 atomes de carbone ou phényle, et $n_1$ vaut 1, 2 ou 3, ou bien $Y_1$ est un groupe N-alkyl ou N,N-dialkyl (substitué)-amino, les parties alkyle contenant chacune 1 à 8 atomes de carbone et sont éventuellement substituées par des groupes électronégatifs, ou bien $Y_1$ est $—NL_2COM_2$, dans laquelle $L_2$ est l'hydrogène ou un reste alkyle ayant 1 à 6 atomes de carbone, et $M_2$ est un groupe alkyle ayant 1 à 12 atomes de carbone, alcoxy, ayant 1 à 4 atomes de carbone ou $—O—(C_2H_4O)_{n1}—U_2$, dans laquelle $U_2$ est un reste alkyle ayant 1 à 8 atomes de carbone, et $n_1$ a la signification donnée ci-dessus,

$Z_1$ est l'hydrogène, un groupe alkyle ayant 1 à 12 atomes de carbone, $—CH_2CO_2R_5$, où $R_5$ est un groupe alkyle ayant 1 à 8 atomes de carbone ou $—(C_2H_4O)_{n1}—U_1$, dans laquelle $U_1$ et $n_1$ ont les significations données ci-dessus, ou $Z_1$ est un groupe alcoxy ayant 1 à 8 atomes de carbone, $—(OC_2H_4)_{n1}—OU_1$, dans laquelle $U_1$ et $n_1$ ont les mêmes significations données ci-dessus, ou bien $Z_1$ est $—NL_2COM_3$, dans laquelle $L_2$ a les significations données ci-dessus et $M_3$ est un groupe alkyle ayant 1 à 18 atomes de carbone, ou bien $Z_1$ est un groupe carbalcoxy ayant 2 à 19 atomes de carbone, $—(CO(OC_2H_4)_{n1}—OU_1$, où $U_1$ et $n_1$ ont les significations données ci-dessus, ou bien $Z_1$ est un atome d'halogène ou désigne ceux des atomes pour former ensemble avec $Y_1$ un noyau saturé ou insaturé, à 5 ou 6 chaînons, éventuellement substitué par un reste alkyle ayant 1 à 4 atomes de carbone,

$W_1$ est l'hydrogène, un reste alkyle ou alcoxy ayant chacun 1 à 4 atomes de carbone,

$R_1$ et $R_2$ indépendamment l'un de l'autre, sont de l'hydrogène, des atomes d'halogène, des groupes cyano, nitro ou $—SO_2U_3$, dans laquelle $U_3$ est un groupe alkyle ayant 1 à 6 atomes de carbone, éventuellement substitué par un reste hydroxyle ou alcoxy ayant 1 à 6 atomes de carbone, ou un groupe phényle,

$R_4$ est la liaison chimique directe ou un pont de formule $—O—$, $—CO—$, $—SO_2—$, $—(CH_2)_{m1}—$, où $m_1$ est un nombre entier de 1 à 8, ou $—CH=CH—$,

$R_3$ est l'hydrogène ou un reste alkyle ayant 1 à 12 atomes de carbone ou les deux restes $R_3$ peuvent être ensemble un pont de formule $—CH_2—$ ou $—CO—$ quand $R_4$ est la liaison chimique directe, et au moins deux des substituants $W_1$, $X_1$, $Y_1$ et $Z_1$ sont différents de l'hydrogène, $X_1$ est différent d'un groupe hydroxyle, quand $Z_1$ est l'hydrogène, et $Z_1$ est différent d'un groupe méthyle, tert-butyle et iso-hexyle, quand $R_4$ est la liaison chimique directe, $—O—$, $—CH_2—$ ou $—CH=CH—$, et les composés de formule :

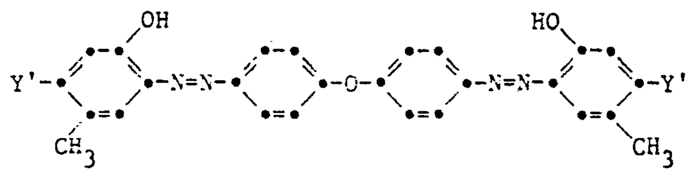

(100)

dans laquelle les substituants Y' sont chacun $—OC_2H_4CH(CH_3)_2$, $—OC_2H_4OC_4H_9$, $—OC_2H_4OC_2H_4O-CH_3$ ou $—OC_3H_7$.

2. Composés selon la revendication 1 de formule (1), dans laquelle

les $X_1$ sont des groupes alcoxy ayant chacun 1 à 6 atomes de carbone, $—NL_1COM_1$, dans laquelle $L_1$ est l'hydrogène ou un reste alkyle ayant 1 à 4 atomes de carbone, et $M_1$ est un reste alkyle ou alcoxy ayant 1 à 20 atomes de carbone, éventuellement substitué par un groupe carbalcoxy ayant 2 à 5 atomes de carbone ou alcoxy ayant 1 à 4 atomes de carbone, ou bien $X_1$ est $—NL_1P(O)(OG_1)_2$, dans laquelle $L_1$ a la signification donnée ci-dessus et $G_1$ est un reste alkyle ayant 1 à 12 atomes de carbone, ou bien $X_1$ est un reste alkylsulfonamide ayant 1 à 20 atomes de carbone ou un groupe hydroxyle,

$Z_1$ est un reste alkyle ayant 1 à 12 atomes de carbone, $—CH_2CO_2R_5$, où $R_5$ est un groupe alkyle ayant 1 à 8 atomes de carbone ou $—(C_2H_4O)_{n1}—U_1$, dans laquelle $U_1$ et $n_1$ ont les significations données ci-dessus, ou bien $Z_1$ est un groupe alcoxy ayant 1 à 8 atomes de carbone, $—(OC_2H_4)_{n1}—OU_1$, dans laquelle $U_1$ et $n_1$ ont les significations données ci-dessus, ou bien $Z_1$ est $—NL_2COM_3$, dans laquelle $L_2$ a les significations données ci-dessus, et $M_3$ est un reste alkyle ayant 1 à 18 atomes de carbone, ou bien $Z_1$ est un groupe carbalcoxy ayant 2 à 19 atomes de carbone, $—CO(OC_2H_4)_{n1}—OU_1$, dans laquelle $U_1$ et $n_1$ ont les significations données plus haut, ou bien $Z_1$ est un atome d'halogène ou désigne ceux des atomes pour former ensemble avec $Y_1$ un noyau saturé ou insaturé, à 5 ou 6 chaînons, éventuellement substitué par un reste alkyle ayant 1 à 4 atomes de carbone,

$Y_1$, $W_1$, $R_1$, $R_2$, $R_3$ et $R_4$ ont les significations données dans la revendication 1,

étant donné qu'au moins un des substituants $W_1$, $Y_1$ et $Z_1$ est différent de l'hydrogène, et $X_1$ est différent

d'un groupe hydroxyle quand $Z_1$ est l'hydrogène, et $Z_1$ est différent d'un groupe méthyle, tert-butyle et iso-hexyle quand $R_4$ est la liaison chimique directe, —O—, —$CH_2$—, ou —CH=CH—, et les composés de formule

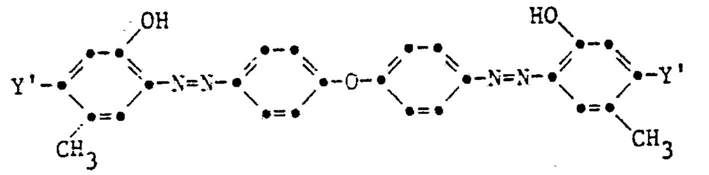

(100)

dans laquelle les substituants Y' sont chacun —$OC_2H_4CH(CH_3)_2$, —$OC_2H_4OC_4H_9$, —$OC_2H_4OC_2H_4O$-$CH_3$ ou —$OC_3H_7$.

3. Composés selon la revendication 1, de formule

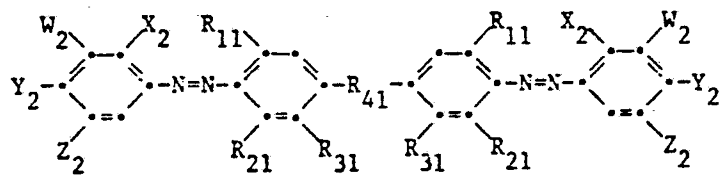

(2)

dans laquelle

$X_2$ est un groupe méthoxy, —$NL_{11}COM_{11}$, dans laquelle $L_{11}$ est l'hydrogène ou un groupe méthyle, et $M_{11}$ est un groupe alkyle ou alcoxy ayant 1 à 16 atomes de carbone, éventuellement substitué par un groupe carbalcoxy ayant 2 à 5 atomes de carbone ou éthoxy ou méthoxy, ou bien $X_2$ est —$NL_{11}P(O)(OG_{11})_2$, dans laquelle $L_{11}$ a la signification donnée ci-dessus et $G_{11}$ est un reste alkyle ayant 1 à 8 atomes de carbone, ou bien $X_2$ est un reste alkylsulfonamide ayant 1 à 16 atomes de carbone ou un groupe hydroxyle,

$Y_2$ est l'hydrogène, un reste alkyle ayant 1 à 4 atomes de carbone, alcoxy ayant 1 à 12 atomes de carbone, —$(OC_2H_4)_{n1}$—$OU_{11}$, dans laquelle $U_{11}$ est l'hydrogène, un reste alkyle ayant 1 à 4 atomes de carbone ou un groupe phényle, et $n_1$ a la signification donnée ci-dessus, ou bien $Y_2$ est un groupe N-alkyl- ou N,N-dialkyl (substitué)-amino, les radicaux alkyle contenant chacun 1 à 8 atomes de carbone et étant éventuellement substitués par un reste méthoxy, éthoxy, acétoxy, hydroxyle ou cyano, ou bien $Y_2$ est —$NL_{21}COM_{21}$, dans laquelle $L_{21}$ est l'hydrogène ou un reste alkyle ayant 1 à 4 atomes de carbone, et $n_1$ a la signification donnée ci-dessus,

$Z_2$ est l'hydrogène, un groupe alkyle ayant 1 à 18 atomes de carbone, —$CH_2CO_2R_{51}$, où $R_{51}$ est un reste alkyle ayant 1 à 8 atomes de carbone ou —$(C_2H_4O)_{n1}$—$U_{11}$, dans laquelle $U_{11}$ et $n_1$ ont les significations données plus haut, ou bien $Z_2$ est un groupe alcoxy ayant 1 à 8 atomes de carbone, —$(OC_2H_4)_{n1}$—$OU_{11}$, où $U_{11}$ et $n_1$ ont les significations données ci-dessus ; —$NL_{21}COM_{31}$, dans laquelle $L_{21}$ a la signification donnée ci-dessus, et $M_{31}$ est un reste alkyle ayant 1 à 12 atomes de carbone ; ou bien $Z_2$ est un groupe carbalcoxy ayant 2 à 12 atomes de carbone, —$CO(OC_2H_4)_{n1}$—$OU_{11}$, où $U_{11}$ et $n_1$ ont les significations données plus haut ; ou bien $Z_2$ est un atome de chlore, de brome ou désigne ceux des atomes pour former ensemble avec $Y_2$ un noyau saturé, à 6 chaînons, contenant éventuellement 1 ou 2 hétéroatomes et éventuellement substitué par un groupe méthyle,

$W_2$ est l'hydrogène ou le groupe méthyle,

$R_{11}$ et $R_{21}$ indépendamment l'un de l'autre sont de l'hydrogène, des atomes de chlore, de brome, des groupes cyano, nitro ou $SO_2U_{31}$, dans laquelle $U_{31}$ est un groupe alkyle ayant 1 à 4 atomes de carbone éventuellement substitué par un radical méthyle ou hydroxyle, ou bien un groupe phényle,

$R_{41}$ est la liaison chimique directe ou un pont de formule —O—, —CO—, —$SO_2$—, —$(CH_2)_{m2}$, où $m_2$ est un nombre entier de 1 à 6, ou —CH=CH—,

$R_{31}$ est de l'hydrogène ou un reste alkyle ayant 1 à 8 atomes de carbone ou bien les deux restes $R_{31}$ peuvent être ensemble un pont de formule —$CH_2$— ou —CO— quand $R_{41}$ est la liaison chimique directe, et au moins un des substituants $Y_2$, $Z_2$, $W_2$ est différent de l'hydrogène, et $X_2$ est différent d'un groupe hydroxyle quand $Z_2$ est l'hydrogène, et $Z_2$ est différent d'un groupe méthyle, tert-butyle et iso-hexyle quand $R_{41}$ est la liaison chimique directe, —O—, —$CH_2$— ou —CH=CH—, et les composés de formule

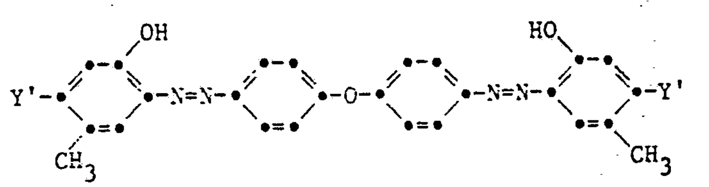

(100)

dans laquelle les substituants Y' sont chacun —$OC_2H_4CH(CH_3)_2$, —$OC_2H_4OC_4H_9$, —$OC_2H_4OC_2H_4O$-$CH_3$ ou —$OC_3H_7$.

4. Composés selon la revendication 3, ayant la formule

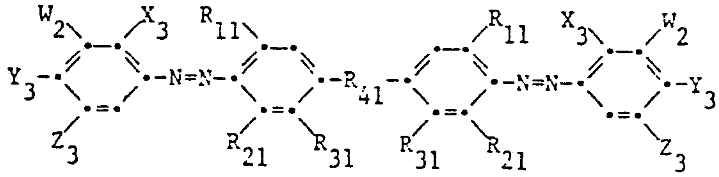

(3)

dans laquelle

$X_3$ est un groupe méthoxy, $—NHCOM_{12}$, où $M_{12}$ est un groupe alkyle ayant 1 à 16 atomes de carbone, éventuellement substitué par un groupe carbalcoxy ayant 2 à 5 atomes de carbone, ou méthoxy ou éthoxy, ou bien $X_3$ est $—NHP(O)(OG_{12})_2$, dans laquelle $G_{12}$ est un reste alkyle ayant 1 à 4 atomes de carbone, ou bien $X_3$ est un groupe alkylsylfonamide ayant 1 à 12 atomes de carbone ou un groupe hydroxyle,

$Y_3$ est l'hydrogène, un groupe alcoxy ayant 1 à 12 atomes de carbone, $—(OC_2H_4)_{n2}—OU_{12}$, dans laquelle $U_{12}$ est l'hydrogène ou un reste alkyle ayant 1 à 4 atomes de carbone, et $n_2$ est 1 ou 2, ou bien $Y_3$ est un groupe N-alkyl- ou N,N-dialkyl (substitué)-amino, les parties alkyle contenant chacune 1 à 8 atomes de carbone et étant éventuellement substituées par des restes méthoxy, éthoxy, acétoxy, hydroxyle ou cyano ; ou bien $Y_3$ est $—NHCOM_{22}$, où $M_{22}$ est un reste alkyle ayant 1 à 4 atomes de carbone, méthoxy ou $—O—(C_2H_4O)_{n2}—CH_3$, dans laquelle $n_2$ a la signification donnée ci-dessus,

$Z_3$ est l'hydrogène, un reste alkyle ayant 1 à 8 atomes de carbone, $—CH_2CO_2R_{52}$, où $R_{52}$ est un reste alkyle ayant 1 à 8 atomes de carbone ou bien $—(C_2H_4O)_{n2}—U_{12}$, dans laquelle $U_{12}$ et $n_2$ ont les significations données plus haut, $Z_3$ est en outre un groupe alcoxy ayant 1 à 8 atomes de carbone, $—(OC_2H_4)_{n2}—OU_{12}$, dans laquelle $U_{12}$ et $n_2$ ont les significations données plus haut ; $NL_{21}COM_{32}$, dans laquelle $L_{21}$ a la signification donnée ci-dessus et $M_{32}$ est un reste alkyle ayant 1 à 8 atomes de carbone, ou bien $Z_3$ est un groupe carbalcoxy ayant 2 à 5 atomes de carbone ou $—CO(OC_2H_4)_{n2}—OU_{11}$, dans laquelle $U_{11}$ et $n_2$ ont les significations données ci-dessus,

$W_2$, $R_{11}$, $R_{21}$, $R_{31}$ et $R_{41}$ ont les significations données plus haut, et au moins un des substituants $Y_3$, $Z_3$, $W_2$ est différent de l'hydrogène, et $X_3$ est différent d'un groupe hydroxyle quand $Z_3$ est l'hydrogène, et $Z_3$ est différent d'un groupe méthyle tert-butyle et iso-hexyle, quand $R_{41}$ est la liaison chimique directe, —O—, $—CH_2—$ ou —CH=CH—, et les composés de formule

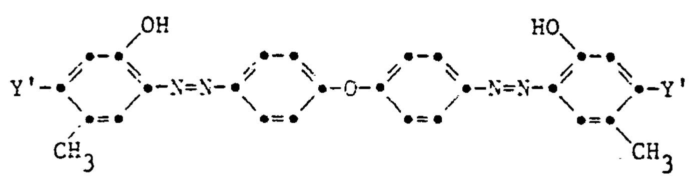

(100)

dans laquelle les substituants Y' sont chacun $—OC_2H_4CH(CH_3)_2$, $—OC_2H_4OC_4H_9$, $—OC_2H_4OC_2H_4O$-$CH_3$ ou $—OC_3H_7$.

5. Composés selon la revendication 3, ayant la formule

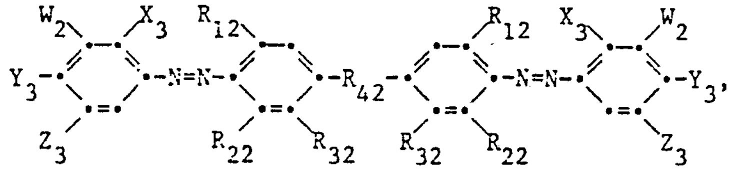

(4)

dans laquelle

$R_{12}$ et $R_{22}$ indépendamment l'un de l'autre sont de l'hydrogène, des atomes de chlore, de brome, des groupes cyano, nitro ou méthylsulfonique,

$R_{42}$ est la liaison chimique directe ou un pont de formule —O—, —CO—, $—SO_2—$, $—(CH_2)_{m2}—$, où $m_2$ a la signification donnée ci-dessus, ou bien —CH=CH—,

$R_{32}$ est de l'hydrogène ou un reste alkyle ayant 1 à 4 atomes de carbone ou bien les deux restes $R_{32}$ peuvent être un pont de formule $—CH_2—$ ou —CO— quand $R_{42}$ est la liaison chimique directe.

$X_3$, $Y_3$, $Z_3$ et $W_2$ ont les significations données ci-dessus,

et au moins un des substituants $Y_3$, $Z_3$, $W_2$ est différent de l'hydrogène, et $X_3$ est différent d'un groupe hydroxyle quand $Z_3$ est l'hydrogène, et $Z_3$ est différent d'un groupe méthyle, tert-butyle, et iso-hexyle, quand $R_{42}$ est la liaison chimique directe, —O—, $—CH_2—$ ou —CH=CH—, et les composés de formule

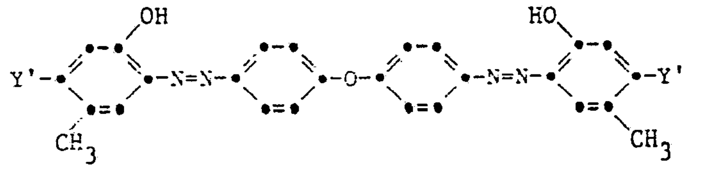

(100)

dans laquelle les substituants Y′ sont chacun $—OC_2H_4CH(CH_3)_2$, $—OC_2H_4OC_4H_9$, $—OC_2H_4OC_2H_4O$-$CH_3$ ou $—OC_3H_7$.

6. Composés selon les revendications 4 et 5, ayant la formule

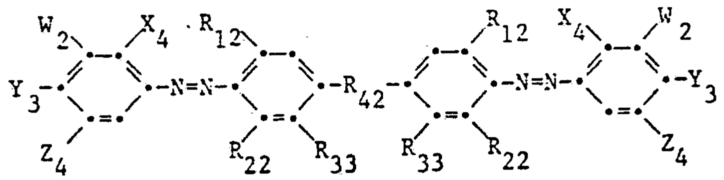

(5)

dans laquelle

$X_4$ est $—NHCOM_{12}$ ou $—NHP(O)(OG_{12})_2$, dans lesquelles $M_{12}$ et $G_{12}$ ont les significations données plus haut, ou bien un groupe hydroxyle,

$Z_4$ est l'hydrogène, un reste alkyle ou alcoxy ayant 1 à 8 atomes de carbone, $—CH_2CO_2R_{53}$, où $R_{53}$ est un reste alkyle ayant 1 à 4 atomes de carbone, $—(C_2H_4O)_2—CH_3$ ou $—C_2H_4O—CH_3$ ; $—(OC_2H_4)_{n2}—OU_{12}$ ou $—NL_{21}COM_{32}$, dans lesquelles $U_{12}$, $n_2$, $L_{21}$ et $M_{32}$ ont les significations données ci-dessus,

$R_{33}$ est l'hydrogène ou le groupe méthyle et les deux restes $R_{33}$ peuvent être ensemble un pont de formule $—CH_2—$ ou $—CO—$ quand $R_{42}$ est la liaison chimique directe,

$W_2$, $Y_3$, $R_{12}$ et $R_{42}$ ont les significations données ci-dessus, et

au moins un des constituants $W_2$, $Y_3$ et $Z_4$ est différent de l'hydrogène, et $X_4$ est différent d'un groupe hydroxyle quand $Z_4$ est l'hydrogène, et $Z_4$ est différent d'un groupe méthyle, tert-butyle et iso-hexyle quand $R_{42}$ est la liaison chimique directe, $—O—$, $—CH_2—$ ou $—CH{=}CH—$, et les composés de formule

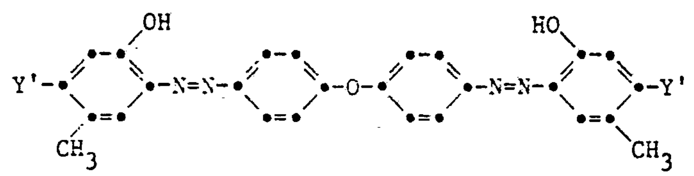

(100)

dans laquelle les substituants Y′ sont chacun $—OC_2H_4CH(CH_3)_2$, $—OC_2H_4OC_4H_9$, $—OC_2H_4OC_2H_4O$-$CH_3$ ou $—OC_3H_7$.

7. Procédé de préparation des composés selon la revendication 1, caractérisé par le fait qu'on tétrazote une diamine de formule

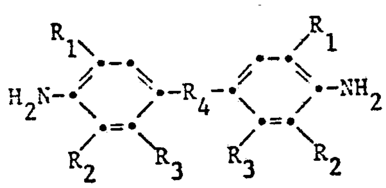

(11)

ou

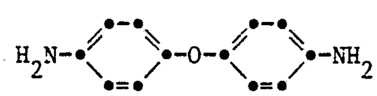

(11a)

dans lesquelles $R_1$, $R_2$, $R_3$ et $R_4$ ont les significations données dans la revendication 1, puisqu'on copule avec un agent de copulation de formule

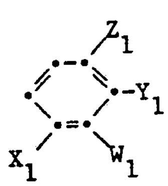

(12)

ou

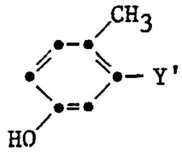

(12a)

dans lesquelles $X_1$, $Y_1$, Y', $Z_1$ et $W_1$ ont les significations données dans la revendication 1.

8. Utilisation des composés selon l'une des revendications 1 à 6 comme colorants d'image dans des articles d'enregistrement photographique en couleur pour le procédé de décoloration à l'argent.

9. Article d'enregistrement photographique en couleur pour le procédé de décoloration à l'argent, qui, dans au moins une couche d'émulsion d'halogénure d'argent ou dans une couche de colloïde en contact avec la couche d'émulsion d'halogénure d'argent, contient au moins un colorant disazoïque soluble dans l'huile, décolorable et résistant à la diffusion selon l'une des revendications 1 à 6.

10. L'image photographique obtenue avec l'article d'enregistrement photographique en couleur selon la revendication 9.